(19) Europäisches Patentamt
European Patent Office
Office européen des brevets

(11) EP 3 909 996 A1

(12) EUROPÄISCHE PATENTANMELDUNG

(43) Veröffentlichungstag:
**17.11.2021 Patentblatt 2021/46**

(21) Anmeldenummer: **21176180.4**

(22) Anmeldetag: **19.07.2018**

(51) Int Cl.:
***C08G 18/66*** (2006.01) ***C08G 18/61*** (2006.01)
***C08G 18/40*** (2006.01) ***C08G 18/73*** (2006.01)
***C08G 18/76*** (2006.01) ***C08G 18/24*** (2006.01)
***C08G 18/42*** (2006.01) ***C08G 18/48*** (2006.01)
***C08G 18/08*** (2006.01) ***C08G 18/32*** (2006.01)
***C08J 9/12*** (2006.01) ***C08J 9/16*** (2006.01)
***B29C 44/34*** (2006.01) ***C08J 9/232*** (2006.01)
***C08J 9/236*** (2006.01) ***B29K 75/00*** (2006.01)
*C08G 101/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2017 EP 17182344**

(62) Dokumentnummer(n) der früheren Anmeldung(en) nach Art. 76 EPÜ:
**18745546.4 / 3 655 454**

(71) Anmelder: **BASF SE**
**67056 Ludwigshafen am Rhein (DE)**

(72) Erfinder:
- **Jaehnigen, Julia Christa**
**67056 Ludwigshafen (DE)**
- **Roy, Nabarun**
**Wyandotte, 48192 (US)**
- **Poeselt, Elmar**
**49448 Lemfoerde (DE)**
- **Petrovic, Dejan**
**49448 Lemfoerde (DE)**
- **Gutmann, Peter**
**67056 Ludwigshafen am Rhein (DE)**
- **Kempfert, Dirk**
**49448 Lemfoerde (DE)**

(74) Vertreter: **Altmann Stößel Dick Patentanwälte PartG mbB**
**Isartorplatz 1**
**80331 München (DE)**

Bemerkungen:
Diese Anmeldung ist am 27-05-2021 als Teilanmeldung zu der unter INID-Code 62 erwähnten Anmeldung eingereicht worden.

# (54) SCHAUMSTOFF AUS THERMOPLASTISCHEM POLYURETHAN

(57) Die vorliegende Erfindung betrifft Schaumstoffpartikel auf Basis von Polyurethan, erhalten oder erhältlich aus dem Polyurethan, ein Verfahren zur Herstellung von Schaumstoffpartikeln sowie Partikelschaumstoffe und deren Verwendung.

EP 3 909 996 A1

## Beschreibung

Die vorliegende Erfindung betrifft ein Polyurethan, insbesondere ein thermoplastisches Polyurethan, erhältlich oder erhalten durch Umsetzung von mindestens den Komponenten (i) bis (ii): (i) eine Polyisocyanatzusammensetzung; (ii) eine Polyolzusammensetzung, umfassend (ii.1) mindestens ein Polyester- oder Polyetherdiol, wobei das Polyester- oder Polyetherdiol ein zahlenmittleres Molekulargewicht im Bereich von 500 bis 3000 g/mol aufweist, (ii.2) mindestens ein Polysiloxan aufweisen zwei endständige gegenüber Isocyanaten reaktive Funktionalitäten ausgewählt aus der Gruppe bestehend aus Thiogruppe, Hydroxylgruppe und Aminogruppe.

Die Erfindung betrifft weiterhin ein Verfahren zur Herstellung dieses Polyurethans, dessen Verwendung und einen Formkörper umfassend das Polyurethan. Des weiteren betrifft die Erfindung Schaumstoffpartikel auf Basis von Polyurethan, erhalten oder erhältlich aus dem Polyurethan, ein Verfahren zur Herstellung von Schaumstoffpartikeln sowie Partikelschaumstoffe und deren Verwendung.

Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden.

Die Eigenschaften von Polyurethanen und Siliconelastomeren sind in weiten Bereichen komplementär. Polyurethane zeichnen sich durch ihre hervorragende mechanische Festigkeit, Elastizität und eine sehr gute Haftung, Abriebfestigkeit sowie eine einfache Verarbeitung durch Extrusion aus der Schmelze aus. Siliconelastomere dagegen besitzen eine ausgezeichnete Temperatur, UV-, und Witterungsstabilität. Sie behalten ihre elastischen Eigenschaften bei tieferen Temperaturen bei und neigen deshalb auch nicht zur Versprödung. Daneben besitzen sie spezielle wasserabweisende und antihaftende Oberflächeneigenschaften. Durch die Kombination von Urethan- und Silicon-Polymeren werden Materialien mit guten mechanischen Eigenschaften zugänglich, die sich zugleich durch eine gegenüber den Siliconen stark vereinfachten Verarbeitungsmöglichkeiten auszeichnen, jedoch weiterhin die positiven Eigenschaften der Silicone besitzen. Für Polymerblends werden allerdings nicht in allen Fällen ausreichende Verträglichkeiten erreicht, außerdem unterscheiden sich die Eigenschaften von Polymerblends oftmals deutlich von denen der Ursprungspolymere. Nachteilig ist weiterhin, dass es oftmals zu einem "Ausblühen" oder einer Phasenmigration inkompatibler Siloxane kommt.

Abhängig von der Art der Anwendung können die Eigenschaften von Polyurethanen durch die Art der Einsatzstoffe und die eingesetzten Mengenverhältnisse variiert werden. Beispielsweise für die Anwendung als Schlauchmaterial oder für den Einsatz als Kabelummantelung ist der Erhalt der mechanischen Eigenschaften von eingesetzten thermoplastischen Polyurethanen auch bei Vorliegen höherer Temperaturen vorteilhaft. Für körpernahe Anwendungen wie beispielsweise Armbänder oder Schmuckbestandteile aber auch diverse protektive Anwendungen wie Schutzfolien, -hüllen ist oftmals eine besondere Haptik und eine gute Hydrophobizität wünschenswert, sowie verbesserte mechanische Eigenschaften, insbesondere Reißdehnung und Zugfestigkeit.

Eine der vorliegenden Erfindung zugrundeliegende Aufgabe bestand daher darin, Materialien mit verbesserter Haptik, guter Hydrophobizität sowie guten mechanische Eigenschaften, insbesondere Reißdehnung und Zugfestigkeit, bereit zu stellen. Eine weitere der vorliegenden Erfindung zugrundeliegende Aufgabe war es, verbesserte Materialien bereitzustellen, deren mechanische Eigenschaften auch bei erhöhten Temperaturen erhalten bleiben.

Erfindungsgemäß wird dieser Aufgabe gelöst durch ein Polyurethan, insbesondere thermoplastisches Polyurethan, erhältlich oder erhalten durch Umsetzung von mindestens den Komponenten (i) bis (ii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan aufweisen zwei endständige gegenüber Isocyanaten reaktive Funktionalitäten ausgewählt aus der Gruppe bestehend aus Thiogruppe, Hydroxylgruppe und Aminogruppe.

Die Erfindung betrifft auch ein Polyurethan, insbesondere thermoplastisches Polyurethan, erhältlich oder erhalten durch Umsetzung von mindestens den Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan aufweisen zwei endständige gegenüber Isocyanaten reaktive Funktionalitäten ausgewählt aus der Gruppe bestehend aus Thiogruppe, Hydroxylgruppe und Aminogruppe;

(iii) eine Kettenverlängererzusammensetzung;

Hierbei wird das Polysiloxan in die Matrix eingebaut, wodurch negative Effekte wie Ausblühen oder Phasenmigration unterbunden werden. Überraschenderweise weisen die erfindungsgemäßen thermoplastischen Polyurethane mit in die Matrix eingebautem Polysiloxan (Si-TPUs) eine verbesserte Haptik auf und eine Hydrophobizität, welche der von reinen Silikonkunststoffen vergleichbar ist. Weiterhin weisen die erfindungsgemäßen Si-TPUs eine verbesserte Stabilität bei thermischer Alterung auf, so werden insbesondere bei weicheren Si-TPUs mit einer Shore-Härte im Bereich von 25A-70A, insbesondere im Bereich von 55 bis 70 A, äußerst überraschend deutlich verbesserte Ergebnisse bei der thermischen Alterung im Kurzzeittest erzielt; gleichfalls ist für weichere TPUs die mechanische Performanz gegenüber den Siloxan-freien TPUs, insbesondere im Hinblick auf Abrieb, Reißdehnung und Zugfestigkeit deutlich verbessert. Für härtere Si-TPUs (Shore-Härte im Bereich von 85A bis 64D, insbesondere im Bereich von 85A bis 95A) ergeben sich überraschenderweise ebenfalls verbesserte Ergebnisse bei der thermischen Alterung, sogar im Langzeittest.

Das Polyurethan, insbesondere das thermoplastische Polyurethan, weist eine Schmelze-Massefließrate (MFR), bestimmt nach DIN EN ISO 1133 (Stand März 2012), im Bereich von 28 bis 350 g/10min, gemessen bei einer Temperatur im Bereich von 190 bis 220°C und einer Masse im Bereich von 1 bis 30 kg, auf. Der MFR ist im Temperaturbereich von 190-200°C messbar, das Material also fließfähig. Bevorzugt weist das Polyurethan, insbesondere das thermoplastische Polyurethan, bei einer Masse im Bereich von 5 bis 35 kg im Temperaturbereich von 190-220°C einen MFR im Bereich von 20 bis 350 g/10min auf. Weiter bevorzugt weist das Polyurethan, insbesondere das thermoplastische Polyurethan, bei einer Masse im Bereich von 10 bis 25 kg im Temperaturbereich von 190-220°C einen MFR im Bereich von 40 bis 330/10min und weiter bevorzugt bei einer Masse im Bereich von 20 bis 25 kg und einer Temperatur von 190°C einen MFR im Bereich von 40 bis 85 g/10min auf.

Das mindestens ein Polysiloxan gemäß (ii.2) weist zwei endständige gegenüber Isocyanaten reaktive Funktionalitäten, ausgewählt aus der Gruppe bestehend aus Thiogruppe, Hydroxylgruppe und Aminogruppe auf, d.h. es weist im Mittel eine Funktionalität zwischen 1,8 und 2,3, bevorzugt zwischen 1,9 und 2,2, insbesondere 2, auf. Bevorzugt weist das erfindungsgemäß eingesetzte mindestens Polysiloxan nur primäre Hydroxylgruppen auf.

Die Erfindung betrifft auch ein Polyurethan, insbesondere thermoplastisches Polyurethan, erhältlich oder erhalten durch Umsetzung von mindestens den Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan der allgemeinen Formel I

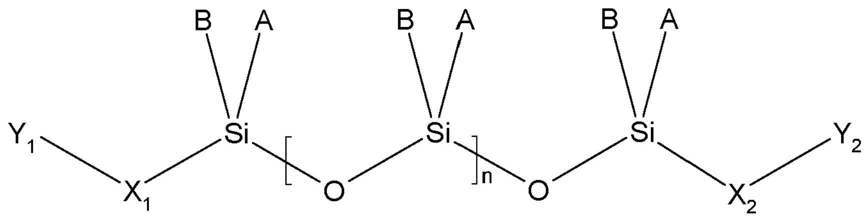

(I),

wobei n eine ganze Zahl im Bereich von 1 bis 250 ist, A und B unabhängig voneinander ausgewählt sind aus der Gruppe der C1-C20-Alkylgruppen; $X_1$, ausgewählt ist aus der Gruppe bestehend aus $(CH_2\text{-}CH_2\text{-}O)_m$-Gruppe, $(CH_2\text{-}CH_2\text{-}CH_2\text{-}O)_m$-Gruppe, $(CH_2\text{-}CHCH_3\text{-}O)_m$-Gruppe, $(CH_2)_m$-O-Gruppe und $(CH_2)_m$-Gruppe, $X_2$ ausgewählt ist aus der Gruppe bestehend aus $(O\text{-}CH_2\text{-}CH_2)_m$-Gruppe, $(O\text{-}CHCH_3\text{-}CH_2)_m$-Gruppe, $(O\text{-}CH_2\text{-}CH_2\text{-}CH_2)_m$-Gruppe, O-$(CH_2)_m$-Gruppe und -$(CH_2)_m$-Gruppe, wobei m für $X_1$, $X_2$ jeweils unabhängig eine ganze Zahl im Bereich von 1 bis 100 ist; und $Y_1$, $Y_2$ unabhängig voneinander ausgewählt sind aus der Gruppe bestehend aus Thiogruppe, Hydroxylgruppe und Aminogruppe;

(iii) eine Kettenverlängererzusammensetzung.

Gemäß einer Ausführungsform ist das Polyurethan, insbesondere das thermoplastische Polyurethan, erhältlich oder erhalten durch Umsetzung von mindestens den Komponenten (i) bis (iii):

(i) eine Diisocyanatzusammensetzung;

(ii) eine Polyolzusammensetzung, umfassend

(ii.1) mindestens ein zweiwertiges Polyester- oder Polyetherdiol mit einem zahlenmittleren Molekulargewicht im Bereich von 500 bis 3000 g/mol,

(ii.2) mindestens ein Polysiloxan der allgemeinen Formel I

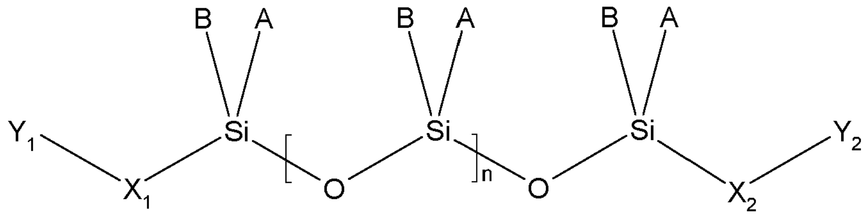

(I),

wobei n eine ganze Zahl im Bereich von 1 bis 250 ist, A und B unabhängig voneinander ausgewählt sind aus der Gruppe der C1-C20-Alkylgruppen; $X_1$, ausgewählt ist aus der Gruppe bestehend aus $(CH_2-CH_2-O)_m$-Gruppe, $(CH_2-CH_2-CH_2-O)_m$-Gruppe, $(CH_2-CHCH_3-O)_m$-Gruppe, $(CH_2)_m$-O-Gruppe und $(CH_2)_m$-Gruppe, $X_2$ausgewählt ist aus der Gruppe bestehend aus $(O-CH_2-CH_2)_m$-Gruppe, $(O-CHCH_3-CH_2)_m$-Gruppe, $(O-CH_2-CH_2-CH_2)_m$-Gruppe, O-$(CH_2)_m$-Gruppe und -$(CH_2)_m$-Gruppe, wobei m für $X_1$, $X_2$ jeweils unabhängig eine ganze Zahl im Bereich von 1 bis 100 ist; und $Y_1$, $Y_2$ unabhängig voneinander ausgewählt sind aus der Gruppe bestehend aus Thiogruppe, Hydroxylgruppe und Aminogruppe;

(iii) eine Kettenverlängererzusammensetzung.

In einer bevorzugten Ausführungsform des Polyurethans, insbesondere des thermoplastischen Polyurethans, ist der Index n des mindestens einen Polysiloxans gemäß (ii.2) eine ganze Zahl im Bereich von 3 bis 50 oder im Bereich von 100 bis 240.

Gemäß einer bevorzugten Ausführungsform des Polyurethans, insbesondere des thermoplastischen Polyurethans sind A und B des Polysiloxans gemäß (ii.2) unabhängig voneinander ausgewählt aus der Gruppe der C1- bis C5-Alkylgruppen, bevorzugt sind A und B jeweils gleich und ausgewählt aus der Gruppe der C1- bis C5-Alkylgruppen, wobei weiter bevorzugt A und B beide eine Methylgruppe sind.

In einer bevorzugten Ausführungsform des Polyurethans, insbesondere des thermoplastischen Polyurethans, ist der Index m für $X_1$, $X_2$ des Polysiloxans gemäß (ii.2) jeweils unabhängig eine ganze Zahl im Bereich von 1 bis 50, bevorzugt im Bereich von 1 bis 20, weiter bevorzugt im Bereich von 1 bis 15.

In einer bevorzugten Ausführungsform des Polyurethans, insbesondere des thermoplastischen Polyurethans, sind $Y_1$ und $Y_2$ des Polysiloxans gemäß (ii.2) beide eine Hydroxylgruppe oder beide eine Aminogruppe.

In einer bevorzugten Ausführungsform des Polyurethans, insbesondere des thermoplastischen Polyurethans, ist $X_1$ des Polysiloxans gemäß (ii.2) eine $(CH_2-CH_2-O)_m$-Gruppe oder eine $(CH_2-CH_2-CH_2-O)_m$-Gruppe oder eine $(CH_2-CHCH_3-O)_m$-Gruppe, $X_2$ des Polysiloxans gemäß (ii.2) ist eine $(O-CHCH_3-CH_2)_m$-Gruppe oder eine $(O-CH_2-CH_2)_m$-Gruppe oder eine $(O-CH_2-CH_2-CH_2)_m$-Gruppe, wobei m für $X_1$, $X_2$ jeweils unabhängig eine ganze Zahl im Bereich von 2 bis 20 ist; und $Y_1$ und $Y_2$ beide eine Hydroxylgruppe sind.

In einer besonders bevorzugten Ausführungsform des Polyurethans, insbesondere des thermoplastischen Polyurethans, ist der Index n des mindestens einen Polysiloxans gemäß (ii.2) eine ganze Zahl im Bereich von 3 bis 50, bevorzugt im Bereich von 5 bis 40, weiter bevorzugt im Bereich von 10 bis 20; $X_1$ des Polysiloxans gemäß (ii.2) ist eine $(CH_2-CH_2-O)_m$-Gruppe, $X_2$ des Polysiloxans gemäß (ii.2) ist eine $(O-CH_2-CH_2)_m$-Gruppe, wobei m für $X_1$, $X_2$ jeweils unabhängig eine ganze Zahl im Bereich von 2 bis 20, weiter bevorzugt im Bereich von 3 bis 15, ist; und $Y_1$ und $Y_2$ sind beide eine Hydroxylgruppe.

In einer weiteren, besonders bevorzugten Ausführungsform des Polyurethans, insbesondere des thermoplastischen Polyurethans, ist der der Index n des mindestens einen Polysiloxans gemäß (ii.2) eine ganze Zahl im Bereich von 100 bis 240, bevorzugt im Bereich von 110 bis 235; $X_1$ und $X_2$ des Polysiloxans gemäß (ii.2) sind beide eine $(CH_2)_m$-Gruppe, wobei m eine ganze Zahl im Bereich von 1 bis 50, weiter bevorzugt im Bereich von 2 bis 10, weiter bevorzugt im Bereich von 2 bis 5, weiter bevorzugt 3, ist, und $Y_1$, $Y_2$ des Polysiloxans gemäß (ii.2) beide eine Aminogruppe sind.

In einer weiteren, besonders bevorzugten Ausführungsform des Polyurethans, insbesondere des thermoplastischen Polyurethans, ist der Index n des mindestens einen Polysiloxans gemäß (ii.2) eine ganze Zahl im Bereich von 3 bis 50, weiter bevorzugt im Bereich von 20 bis 40; $X_1$ und $X_2$ des Polysiloxans gemäß (ii.2) sind beide eine $(CH_2)_m$-Gruppe, wobei m eine ganze Zahl im Bereich von 1 bis 50, weiter bevorzugt im Bereich von 2 bis 10, weiter bevorzugt im

Bereich von 2 bis 5, weiter bevorzugt 3,ist, und $Y_1$, $Y_2$ des Polysiloxans gemäß (ii.2) beide eine Aminogruppe sind.

In einer weiteren, besonders bevorzugten Ausführungsform des Polyurethans, insbesondere des thermoplastischen Polyurethans, ist der Index n des mindestens einen Polysiloxans gemäß (ii.2) eine ganze Zahl im Bereich von 3 bis 50, bevorzugt im Bereich von 10 bis 30; $X_1$ und $X_2$ des Polysiloxans gemäß (ii.2) sind beide eine $(CH_2)_m$-Gruppe, wobei m Null oder eine ganze Zahl im Bereich von 1 bis 20, bevorzugt im Bereich von 1 bis 10, weiter bevorzugt 1, ist, und $Y_1$, $Y_2$ des Polysiloxans gemäß (ii.2) sind beide eine Hydroxylgruppe.

In einer bevorzugten Ausführungsform des Polyurethans, insbesondere des thermoplastischen Polyurethans, ist das mindestens eine Polysiloxan gemäß (ii.2) in einem Anteil im Bereich von 0,1 bis 50 Gewichts-%, bevorzugt im Bereich von 1 bis 30 Gewichts-%, weiter bevorzugt im Bereich von 5 bis 20 Gewichts-%, bezogen auf das Gesamtgewicht aller Komponenten (ii.1) und (ii.2) enthalten. Die Erfindung betrifft daher auch ein Polyurethan, insbesondere ein thermoplastisches Polyurethan, wie zuvor beschrieben, in welchem das mindestens eine Polysiloxan gemäß (ii.2) in einem Anteil im Bereich von 0,1 bis 50 Gewichts-%, bevorzugt im Bereich von 1 bis 39 Gewichts-%, weiter bevorzugt im Bereich von 1 bis 30 Gewichts-%, weiter bevorzugt im Bereich von 7 bis 30 Gewichts-%, weiter bevorzugt im Bereich von 5 bis 20 Gewichts-%, bezogen auf das Gesamtgewicht aller Komponenten (ii.1) und (ii.2) enthalten ist.

In einer bevorzugten Ausführungsform weist das Polyurethan, insbesondere das thermoplastische Polyurethan, einen Hartsegmentanteil im Bereich von 10 bis 60 Gewichts-%, bevorzugt im Bereich von 10 bis 50 Gewichts-%, weiter bevorzugt im Bereich 15 bis 40 Gewichts-%, weiter bevorzugt im Bereich von 17 bis 30 Gewichts-%, bezogen auf das Gesamtgewicht aller Komponenten (i), (ii), (ii), auf.

Demgemäß betrifft die vorliegende Erfindung gemäß einer weiteren Ausführungsform ein Polyurethan, insbesondere ein thermoplastisches Polyurethan, wie zuvor beschrieben, welches einen Hartsegmentanteil im Bereich von 10 bis 60 %, bevorzugt im Bereich von 10 bis 50 Gewichts-%, weiter bevorzugt im Bereich von 15 bis 40 %, weiter bevorzugt im Bereich von 17 bis 30 Gewichts-%, bezogen auf das Gesamtgewicht aller Komponenten (i), (ii), (ii), aufweist.

In einer bevorzugten Ausführungsform weist das Polyurethan, insbesondere das thermoplastische Polyurethan, eine Härte im Bereich von Shore 30A bis 98AA oder im Bereich von Shore 40D bis 64D, bevorzugt im Bereich von Shore 30A bis 95A, weiter bevorzugt im Bereich von Shore 70A bis 95A, auf. Shore-Härten im Bereich von 70A bis 95A sind insbesondere bevorzugt bei der Verwendung für Schaumstoffpartikel.

In einer besonders bevorzugten Ausführungsform des Polyurethans, insbesondere des thermoplastischen Polyurethans, ist das mindestens eine Polysiloxan gemäß (ii.2) in einem Anteil im Bereich von 0,1 bis 60 Gewichts-%, bevorzugt im Bereich von 1 bis 60 Gewichts-%, weiter bevorzugt im Bereich 1 bis 50 Gewichts-%, weiter bevorzugt im Bereich von 1 bis 30 Gewichts-%, weiter bevorzugt im Bereich von 5 bis 45 Gewichts-%, weiter bevorzugt im Bereich von 5 bis 20 Gewichts-%, bezogen auf das Gesamtgewicht aller Komponenten (ii.1) und (ii.2) enthalten und das Polyurethan, insbesondere das thermoplastische Polyurethan, weist einen Hartsegmentanteil im Bereich von 10 bis 50 Gewichts-%, bevorzugt von 15 bis 40 Gewichts-%, weiter bevorzugt im Bereich von 17 bis 30 Gewichts-%,, bezogen auf das Gesamtgewicht aller Komponenten (i), (ii), (ii), auf. Die Erfindung betrifft demgemäß auch ein Polyurethan, insbesondere ein thermoplastisches Polyurethan, wie zuvor beschrieben, in welchem das mindestens eine Polysiloxan gemäß (ii.2) in einem Anteil im Bereich von 0,1 bis 60 Gewichts-%, bevorzugt im Bereich von 0,1 bis 50 Gewichts-%, weiter bevorzugt im Bereich von 1 bis 30 Gewichts-%, weiter bevorzugt im Bereich von 5 bis 45 Gewichts-%, weiter bevorzugt im Bereich von 5 bis 20 Gewichts-%, bezogen auf das Gesamtgewicht aller Komponenten (ii.1) und (ii.2) enthalten ist und welches einen Hartsegmentanteil im Bereich von 10 bis 50 Gewichts-%, bevorzugt im Bereich von 15 bis 40 Gewichts-%, weiter bevorzugt im Bereich von 17 bis 30 Gewichts-%, bezogen auf das Gesamtgewicht aller Komponenten (i), (ii), (ii), aufweist.

Erfindungsgemäß wird gemäß (iii) eine Kettenverlängererzusammensetzung eingesetzt. In einer Ausführungsform des Polyurethans, insbesondere des thermoplastischen Polyurethans, umfasst die Kettenverlängererzusammensetzung gemäß (iii) mindestens eine Verbindung, welche mindestens zwei gegenüber Isocyanaten reaktive funktionelle Gruppen, bevorzugt zwei gegenüber Isocyanaten reaktive funktionelle Gruppen, aufweist, wobei die gegenüber Isocyanaten reaktiven funktionellen Gruppen bevorzugt ausgewählt sind aus der Gruppe von Hydroxylgruppe, Aminogruppe und Thiolgruppe. Erfindungsgemäß wird unter einem Kettenverlängerer eine Verbindung verstanden, die ein Molekulargewicht Mw von kleiner als 300 g/mol aufweist. Dabei ist im Rahmen der vorliegenden Erfindung auch die Polyolzusammensetzung gemäß (ii) frei von derartigen Verbindungen. Erfindungsgemäß können Kettenverlängerer eingesetzt werden, die für die Herstellung von Polyurethanen bekannt sind. Mögliche, niedermolekulare Kettenverlängerer sind beispielsweise in "Kunststoffhandbuch, Band 7, Polyurethane" Carl Hanser Verlag, 3. Auflage, 1993, Kapitel 3.2 und 3.3.2 genannt. In einer bevorzugten Ausführungsform des Polyurethans, insbesondere des thermoplastischen Polyurethans, ist die mindestens eine Verbindung, welche gegenüber Isocyanaten reaktive funktionelle Gruppen aufweist, ausgewählt aus der Gruppe bestehend aus 1,2-Ethandiol, 1,4-Butandiol, 1,6-Hexandiol und 2,4-Diamino-3,5-di(methylthio)toluol, und ist bevorzugt 1,4-Butandiol.

Erfindungsgemäß wird gemäß (ii.1) mindestens ein Polyester- oder Polyetherdiol, d.h. mindestens ein zweiwertiges Polyester- oder Polyetherpolyol, eingesetzt. Diole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Erfindungsgemäß werden Polyesterdiole oder Polyetherdiole eingesetzt. Ebenso könnten Polycarbonate eingesetzt werden. Auch Copolymere könnten im Rahmen der vorliegenden Erfindung eingesetzt werden. Das zahlenmittlere Molekulargewicht $M_n$ der erfindungsgemäß eingesetzten Diole liegt im Bereich von 0,5x$10^3$g/mol bis 3x$10^3$ g/mol, bevorzugt zwischen 0,8 x$10^3$ g/mol und 3 x$10^3$ g/mol.

Das mindestens eine Polyester- oder Polyetherdiol ist zweiwertig, d.h. es weist eine mittlere Funktionalität zwischen 1,8 und 2,3, bevorzugt zwischen 1,9 und 2,2, insbesondere 2, auf. Bevorzugt weisen die erfindungsgemäß eingesetzten Polyester- oder Polyetherdiole nur primäre Hydroxylgruppen auf.

In einer bevorzugten Ausführungsform des Polyurethans, insbesondere des thermoplastischen Polyurethans, ist das Polyester- oder Polyetherdiol gemäß (ii.1) ausgewählt aus der Gruppe bestehend aus Polyethylenglykol, Polypropylenglykol, Polyadipaten, Polycarbonat(diol)en und Polycaprolactonen und Polytetrahydrofuran (PTHF), bevorzugt aus der Gruppe von Polyesterdiolen und PTHF, wobei das Polyesterdiol bevorzugt aus Adipinsäure, 1,4-Butandiol und 1,6-Hexandiol aufgebaut ist; weiter bevorzugt ist PTHF, wobei das PTHF bevorzugt ein zahlenmittleres Molekulargewicht $M_n$ im Bereich von 500 bis 3000 g/mol, bevorzugt im Bereich von 1000 bis 2000 g/mol, aufweist.

Erfindungsgemäß wird gemäß (i) eine Polyisocyanatzusammensetzung eingesetzt. Die Polyisocyanatzusammensetzung enthält dabei mindestens ein Polyisocyanat. Erfindungsgemäß kann die Polyisocyanatzusammensetzung auch zwei oder mehr Polyisocyanate enthalten. Bevorzugte Polyisocyanate sind im Rahmen der vorliegenden Erfindung Diisocyanate, insbesondere aliphatische oder aromatische Diisocyanate.

Des Weiteren können im Rahmen der vorliegenden Erfindung vorreagierte Prepolymere als Isocyanatkomponenten eingesetzt werden, bei denen ein Teil der OH-Komponenten in einem vorgelagerten Reaktionsschritt mit einem Isocyanat zur Reaktion gebracht werden. Diese Prepolymere werden in einem nachfolgenden Schritt, der eigentlichen Polymerreaktion, mit den restlichen OH-Komponenten zur Reaktion gebracht und bilden dann das thermoplastische Polyurethan. Die Verwendung von Prepolymeren bietet die Möglichkeit, auch OH-Komponenten mit sekundären Alkoholgruppen zu verwenden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyldiisocyanat (H12MDI). Geeignete aromatische Diisocyanate sind insbesondere 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethandiisocyanat und/oder Diphenylmethandiisocyanate (MDI).

In einer bevorzugten Ausführungsform des Polyurethans, insbesondere des thermoplastischen Polyurethans, enthält die Polyisocyanatzusammensetzung gemäß (i) mindestens ein Polyisocyanat ausgewählt aus den Diisocyanaten, bevorzugt ausgewählt aus der Gruppe bestehend aus 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI) und 4,4'-, 2,4'- und 2,2'-Methylendicyclohexyldiisocyanat (H12MDI).

Erfindungsgemäß kann die Polyisocyanatzusammensetzung gemäß (i) auch ein oder mehrere Lösungsmittel enthalten. Geeignete Lösungsmittel sind dem Fachmann bekannt. Geeignet sind beispielsweise nicht reaktive Lösungsmittel wie Ethylacetat, Methylethylketon und Kohlenwasserstoffe.

Erfindungsgemäß werden die Komponenten (i) bis (iii) in einem Verhältnis eingesetzt, so dass das molare Verhältnis aus der Summe der Funktionalitäten der eingesetzten Polyolzusammensetzung (ii), insbesondere Polyester- oder Polyetherdiol gemäß (ii.1) und Polysiloxan (ii.2), und Kettenverlängererzusammensetzung (iii) zu der Summe der Funktionalitäten der eingesetzten Polyisocyanatzusammensetzung (i) im Bereich von 1 zu 0,8 bis 1 zu 1,3 liegt. Bevorzugt liegt das Verhältnis im Bereich von 1 zu 0,9 bis 1 zu 1,2, weiter bevorzugt im Bereich von 1 zu 0,965 bis 1 zu 1,05, besonders bevorzugt im Bereich von 1 zu 0,98 bis 1 zu 1,03.

Gemäß einer besonders bevorzugten Ausführungsform betrifft die Erfindung ein Polyurethan, insbesondere ein thermoplastisches Polyurethan, erhältlich oder erhalten durch Umsetzung von mindestens den Komponenten (i) bis (iii):

(i) eine Diisocyanatzusammensetzung, welche mindestens 4,4'-MDI oder HDI umfasst;
(ii) eine Polyolzusammensetzung, umfassend

(ii.1) mindestens ein Polyetherdiol, bevorzugt PTHF, oder ein Polyesterdiol, wobei das Polyetherdiol oder das Polyesterdiol ein zahlenmittleres Molekulargewicht im Bereich von 500 bis 3000 g/mol aufweist,
(ii.2) mindestens ein Polysiloxan der allgemeinen Formel Ia

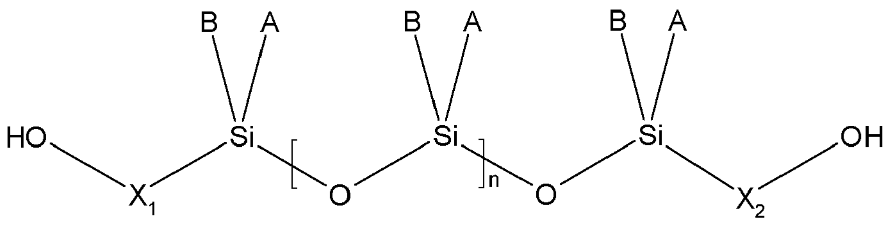

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ jeweils unabhängig eine ganze Zahl im Bereich von 3 bis 15 ist,

(iii) eine Kettenverlängererzusammensetzung, welche mindestens ein Diol oder Diamin ausgewählt aus der Gruppe bestehend aus 1,4-Butandiol, 1,6-Hexandiol, 1,2-Ethandiol und 2,4-Diamino-3,5-di(methylthio)toluol, umfasst;

Gemäß einer weiteren besonders bevorzugten Ausführungsform betrifft die Erfindung ein Polyurethan, insbesondere ein thermoplastisches Polyurethan, erhältlich oder erhalten durch Umsetzung von mindestens den Komponenten (i) bis (iii):

(i) eine Diisocyanatzusammensetzung, welche mindestens MDI umfasst;
(ii) eine Polyolzusammensetzung, umfassend

(ii.1) mindestens ein Polyetherdiol, bevorzugt PTHF, welches ein zahlenmittleres Molekulargewicht im Bereich von 500 bis 3000 g/mol aufweist,
(ii.2) mindestens ein Polysiloxan der allgemeinen Formel Ia

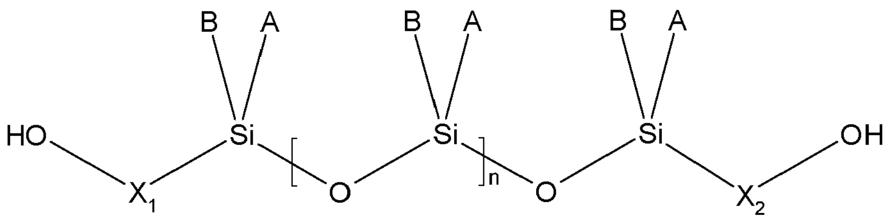

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,6-Hexandiol umfasst.

Bevorzugt weist das Polyurethan, insbesondere das thermoplastische Polyurethan, gemäß dieser Ausführungsform eine Schmelz-Massefließrate bestimmt nach DIN EN ISO 1133 (Stand März 2012) gemessen bei einer Temperatur von 190 °C und 21,6 kg im Bereich von 20 bis 350 g/10min, bevorzugt im Bereich von 35 bis 90 g/10min, weiter bevorzugt im Bereich von 40 bis 85 g/10min, auf.

Gemäß einer weiteren besonders bevorzugten Ausführungsform betrifft die Erfindung ein Polyurethan, insbesondere ein thermoplastisches Polyurethan, erhältlich oder erhalten durch Umsetzung von mindestens den Komponenten (i) bis (iii):

(i) eine Diisocyanatzusammensetzung, welche mindestens HDI umfasst;
(ii) eine Polyolzusammensetzung, umfassend

(ii.1) mindestens ein Polyesterdiol mit einem zahlenmittleren Molekulargewicht im Bereich von 500 bis 3000 g/mol,
(ii.2) mindestens ein Polysiloxan der allgemeinen Formel Ia

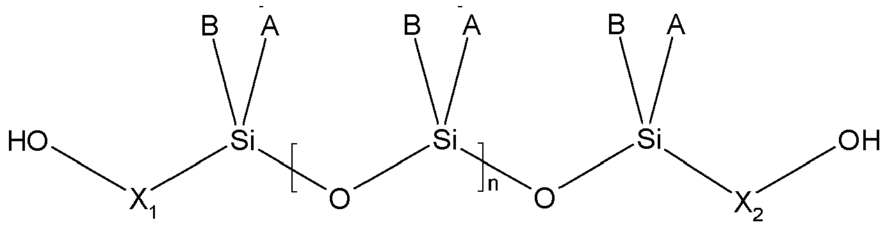

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,6-Hexandiol umfasst.

Bevorzugt weist das Polyurethan, insbesondere das thermoplastische Polyurethan, gemäß dieser Ausführungsform eine Schmelz-Massefließrate bestimmt nach DIN EN ISO 1133 (Stand März 2012) gemessen bei einer Temperatur von 190 °C und 3,8 kg im Bereich von 20 bis 350 g/10min, bevorzugt im Bereich von 28 bis 220 g/10min, weiter bevorzugt im Bereich von 28 bis 215 g/10min, auf.

Gemäß einer weiteren besonders bevorzugten Ausführungsform betrifft die Erfindung ein Polyurethan, insbesondere thermoplastisches Polyurethan, erhältlich oder erhalten durch Umsetzung von mindestens den Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyesterdiol, welches ein zahlenmittleres Molekulargewicht $M_n$ im Bereich von 500 bis 3000 g/mol aufweist,
(ii.2) mindestens ein Polysiloxan der allgemeinen Formel Ia

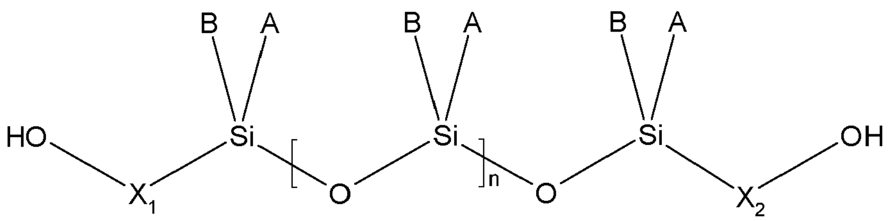

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

Bevorzugt weist das Polyurethan, insbesondere das thermoplastische Polyurethan, gemäß dieser Ausführungsform eine Schmelze-Massefließrate gemessen bei einer Temperatur von 220°C und 2,16 kg im Bereich von 20 bis 350 g/10min, bevorzugt im Bereich von 60 bis 120 g/10min, weiter bevorzugt im Bereich von 65 bis 105 g/10min, auf.

Gemäß einer weiteren besonders bevorzugten Ausführungsform betrifft die Erfindung ein Polyurethan, insbesondere ein thermoplastisches Polyurethan, erhältlich oder erhalten durch Umsetzung von mindestens den Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyetherdiol, bevorzugt PTHF, welches ein zahlenmittleres Molekulargewicht $M_n$ im Bereich von 500 bis 3000 g/mol aufweist,
(ii.2) mindestens ein Polysiloxan der allgemeinen Formel Ia

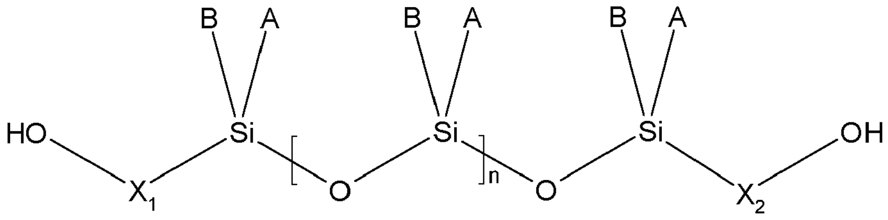

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,2-Ethandiol oder 2,4-Diamino-3,5-di(methylthio)toluol, bevorzugt 2,4-Diamino-3,5-di(methylthio)toluol, umfasst.

Bevorzugt weist das Polyurethan, insbesondere das thermoplastische Polyurethan, gemäß dieser Ausführungsform eine Schmelze-Massefließrate bestimmt nach DIN EN ISO 1133 (Stand März 2012) gemessen bei einer Temperatur von 190°C und 10 kg im Bereich von 20 bis 350 g/10min, bevorzugt im Bereich von 75 bis 350 g/10min, weiter bevorzugt im Bereich von 85 bis 340 g/10min, auf.

Erfindungsgemäß können bei der Umsetzung der Komponenten (i) bis (iii) weitere Additive zugesetzt werden, beispielsweise Katalysatoren oder Hilfs- und Zusatzstoffe. Zusatzstoffe und Hilfsmittel sind dem Fachmann an sich bekannt. Erfindungsgemäß können auch Kombinationen aus mehreren Additiven eingesetzt werden.

Im Rahmen der vorliegenden Erfindung werden unter dem Begriff "Additiv" insbesondere Katalysatoren, Hilfsstoffe und Zusatzstoffe verstanden, insbesondere Stabilisatoren, Nukleationsmittel, Füllstoffe wie z.B. Silikate oder Vernetzer wie z.B. mehrfunktionale Alumosilikate.

Gemäß einer weiteren Ausführungsform betrifft die vorliegende Erfindung demgemäß ein Polyurethan, insbesondere ein thermoplastisches Polyurethan, wie zuvor beschrieben, wobei das thermoplastische Polyurethan mindestens ein Additiv enthält.

Als Hilfs- und Zusatzstoffe genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band 7, herausgegeben von Vieweg und Höchtlen, Carl Hanser Verlag, München 1966 (S. 103-113) entnommen werden.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Bismuthverbindungen, wie Bismuthalkylverbindungenoder ähnliche, oder Eisenverbindungen, bevorzugt Eisen-(MI)-acetylacetonat oder die Metallsalze der Carbonsäuren wie z.B. Zinn-II-isooctoat, Zinndioctoat, Titansäureester oder Bismut-(III)-neodecanoat.

Gemäß einer bevorzugten Ausführungsform werden die Katalysatoren ausgewählt aus Zinnverbindungen und Bismuthverbindungen, weiter bevorzugt Zinnalkylverbindungen oder Bismuthalkylverbindungen. Besonders geeignet sind die Zinn-II-isooctoat und Bismuthneodecanoat.

Die Katalysatoren werden üblicherweise in Mengen von 0 bis 2000 ppm, bevorzugt 1 ppm bis 1000 ppm, weiter bevorzugt 2 ppm bis 500 ppm und am meisten bevorzugt von 5 ppm bis 300 ppm eingesetzt.

Geeignete Antioxidantien sind ebenfalls grundsätzlich aus dem Stand der Technik bekannt. In einer Ausführungsform ist das Polyurethan, insbesondere das thermoplastische Polyurethan, erhältlich oder erhalten durch Umsetzung von mindestens den Komponenten (i) bis (ii) und ggf. (iii) und zusätzlich

(iv) einer Antioxidantzusammensetzung, wobei die Antioxidantzusammensetzung mindestens ein Antioxidant ausgewählt aus den sterisch gehinderten Phenolen, bevorzugt ausgewählt aus den sterisch gehinderten Phenolen, welche mindestens in ortho-Position benachbart zur OH-Gruppe eine tert-Butylgruppe aufweisen, weiter bevorzugt ausgewählt aus der Gruppe bestehend aus Ethylenbis(oxyethylen)bis-(3-(5-tert-butyl-4-hydroxy-m-tolyl)-propionat) (Irganox 245 FF, CAS-Nummer 36443-68-2), Octadecyl-3-(3,5-di-tert-butyl-4-hydroxyphenyl)-propionat (Irganox 1076, CAS-Nummer 2082-79-3), Octyl-3,5-di-tert-butyl-4-hydroxy-hydrocinnamat (Irganox 1135, CAS-Nummer 125643-61-0), N,N'-Hexan-1,6-diylbis[3-(3,5-di-tert-butyl-4-hydroxyphenylpropionamid] (Irganox 1098, CAS-Nummer 23128-74-7), Pentaerythritol tetrakis(3-(3,5-di-tert-butyl-4-hydroxyphenyl)propionat) (Irganox 1010, CAS-Nummer 6683-19-8) und 3,5-Bis(tert-butyl)-4-hydroxytoluol (BHT, CAS-Nummer 128-37-0), weiter bevorzugt ausgewählt aus der Gruppe bestehend aus Pentaerythritol tetrakis(3-(3,5-di-tert-butyl-4-hydroxyphenyl)propionat), N,N'-Hexan-1,6-diylbis[3-(3,5-di-tert-butyl-4-hydroxyphenylpropionamid] und einer Mischung aus Pentaerythritol tetrakis(3-(3,5-di-tert-butyl-4-hydroxyphenyl)propionat) und N,N'-Hexan-1,6-diylbis[3-(3,5-di-tert-butyl-4-hydroxyphenylpropionamid].

Gemäß einem weiteren Aspekt betrifft die vorliegende Erfindung auch ein Verfahren zur Herstellung eines Polyurethans, insbesondere eines thermoplastischen Polyurethans, umfassend die Umsetzung der Komponenten (i) bis (ii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan aufweisen zwei endständige gegenüber Isocyanaten reaktive Funktionalitäten ausgewählt aus der Gruppe bestehend aus Thiogruppe, Hydroxylgruppe und Aminogruppe.

Gemäß einem weiteren Aspekt betrifft die vorliegende Erfindung auch ein Verfahren zur Herstellung eines Polyurethans, insbesondere eines thermoplastischen Polyurethans, umfassend die Umsetzung der Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan aufweisen zweiendständige gegenüber Isocyanaten reaktive Funktionalitäten ausgewählt aus der Gruppe bestehend aus Thiogruppe, Hydroxylgruppe und Aminogruppe;

(iii) eine Kettenverlängererzusammensetzung.

Weiter betrifft die vorliegende Erfindung auch ein Verfahren zur Herstellung eines Polyurethans, insbesondere eines thermoplastischen Polyurethans, umfassend die Umsetzung der Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan der allgemeinen Formel I

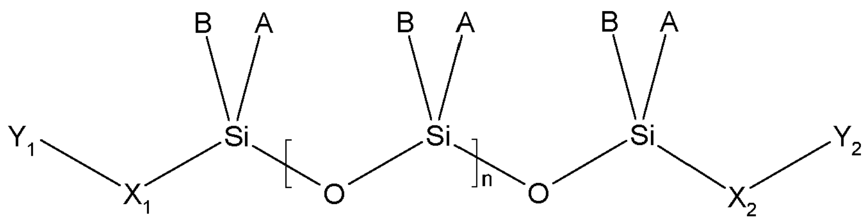

(I),

wobei n eine ganze Zahl im Bereich von 1 bis 250 ist, A und B unabhängig voneinander ausgewählt sind aus der Gruppe der C1-C20-Alkylgruppen; $X_1$ ausgewählt ist aus der Gruppe bestehend aus $(CH_2\text{-}CH_2\text{-}O\text{-})_m$-Gruppe, $(CH_2\text{-}CH_2\text{-}CH_2\text{-}O)_m$-Gruppe, $(CH_2\text{-}CHCH_3\text{-}O)_m$-Gruppe, $(CH_2)_m$-O-Gruppe und $(CH_2)_m$-Gruppe, $X_2$ ausgewählt ist aus der Gruppe bestehend aus $(O\text{-}CH_2\text{-}CH_2)_m$-Gruppe, $(O\text{-}CHCH_3\text{-}CH_2)_m$-Gruppe, $(O\text{-}CH_2\text{-}CH_2\text{-}CH_2)_m$-Gruppe, $\text{-}O\text{-}(CH_2)_m$-Gruppe und $\text{-}(CH_2)_m$-Gruppe, wobei m für $X_1$, $X_2$ jeweils unabhängig eine ganze Zahl im Bereich von 1 bis 100 ist; und $Y_1$, $Y_2$ unabhängig voneinander ausgewählt sind aus der Gruppe bestehend aus Thiogruppe, Hydroxylgruppe und Aminogruppe;

(iii) eine Kettenverlängererzusammensetzung.

Gemäß einer bevorzugten Ausführungsform betrifft die Erfindung auch ein Verfahren zur Herstellung eines Polyurethans, insbesondere eines thermoplastischen Polyurethans, umfassend die Umsetzung der Komponenten (i) bis (iii):

(i) eine Diisocyanatzusammensetzung;
(ii) eine Polyolzusammensetzung, umfassend

(ii.1) mindestens ein zweiwertiges Polyester- oder Polyetherdiol mit einem zahlenmittleren Molekulargewicht im Bereich von 500 bis 3000 g/mol,
(ii.2) mindestens ein Polysiloxan der allgemeinen Formel I

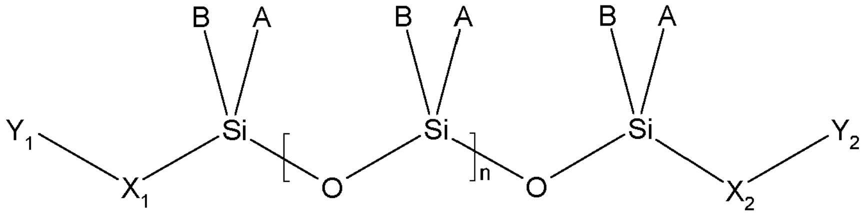

(I),

wobei n eine ganze Zahl im Bereich von 1 bis 250 ist, A und B unabhängig voneinander ausgewählt sind aus der Gruppe der C1-C20-Alkylgruppen; $X_1$ ausgewählt ist aus der Gruppe bestehend aus $(CH_2\text{-}CH_2\text{-}O\text{-})_m$-Gruppe, $(CH_2\text{-}CH_2\text{-}CH_2\text{-}O)_m$-Gruppe, $(CH_2\text{-}CHCH_3\text{-}O)_m$-Gruppe, $(CH_2)_m$-O-Gruppe und $(CH_2)_m$-Gruppe, $X_2$ ausgewählt ist aus der Gruppe bestehend aus $(O\text{-}CH_2\text{-}CH_2)_m$-Gruppe, $O\text{-}CHCH_3\text{-}CH_2)_m$-Gruppe, $(O\text{-}CH_2\text{-}CH_2\text{-}CH_2)_m$-Gruppe, $\text{-}O\text{-}(CH_2)_m$-Gruppe und $(CH_2)_m$-Gruppe, wobei m für $X_1$, $X_2$ jeweils unabhängig eine ganze Zahl im Bereich von 1 bis 100 ist; und $Y_1$, $Y_2$ unabhängig voneinander ausgewählt sind aus der Gruppe bestehend aus Thiogruppe, Hydroxylgruppe und Aminogruppe;

(iii) eine Kettenverlängererzusammensetzung.

Gemäß einer weiteren bevorzugten Ausführungsform betrifft die Erfindung auch ein Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI oder HDI umfasst;
(ii) eine Polyolzusammensetzung, umfassend

(ii.1) mindestens ein Polyetherdiol, bevorzugt PTHF, oder ein Polyesterdiol, wobei das Polyether- oder Polyesterdiol ein zahlenmittleres Molekulargewicht im Bereich von 500 bis 3000 g/mol aufweist,
(ii.2) mindestens ein Polysiloxan der allgemeinen Formel Ia

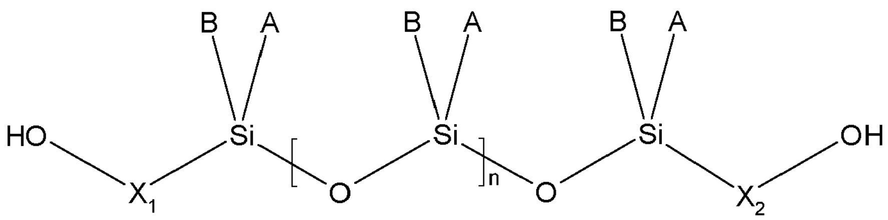

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ jeweils unabhängig eine ganze Zahl im Bereich von 3 bis 15 ist.;

(iii) eine Kettenverlängererzusammensetzung, welche mindestens ein Diol oder Diamin ausgewählt aus der Gruppe bestehend aus 1,4-Butandiol, *1,6*-Hexandiol, 1,2-Ethandiol und 2,4-Diamino-3,5-di(methylthio)toluol, umfasst;

Gemäß einer weiteren bevorzugten Ausführungsform betrifft die Erfindung auch ein Verfahren zur Herstellung

eines Polyurethans, insbesondere eines thermoplastischen Polyurethans, umfassend die Umsetzung der Komponenten (i) bis (iii):

(i) eine Diisocyanatzusammensetzung, welche mindestens MDI umfasst;
(ii) eine Polyolzusammensetzung, umfassend

(ii.1) mindestens ein Polyetherdiol, bevorzugt PTHF, mit einem zahlenmittleren Molekulargewicht im Bereich von 500 bis 3000 g/mol,
(ii.2) mindestens ein Polysiloxan der allgemeinen Formel Ia

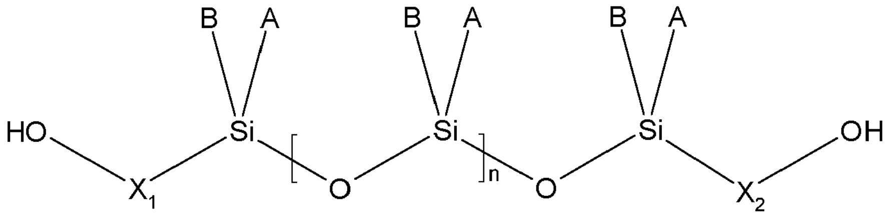
(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

Gemäß einer weiteren bevorzugten Ausführungsform betrifft die Erfindung auch ein Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyetherdiol, bevorzugt PTHF, mit einem zahlenmittleren Molekul argewicht im Bereich von 500 bis 3000 g/mol,
(ii.2) mindestens ein Polysiloxan der allgemeinen Formel Ia

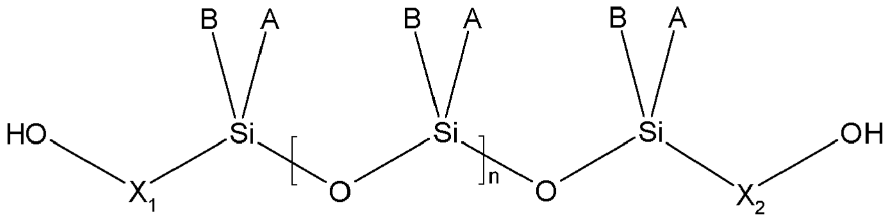
(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,6-Hexandiol umfasst.

Gemäß einer weiteren bevorzugten Ausführungsform betrifft die Erfindung auch Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyesterdiol, welches ein zahlenmittleres Molekulargewicht $M_n$ im Bereich von 500 bis 3000 g/mol aufweist,

(ii.2) mindestens ein Polysiloxan der allgemeinen Formel Ia

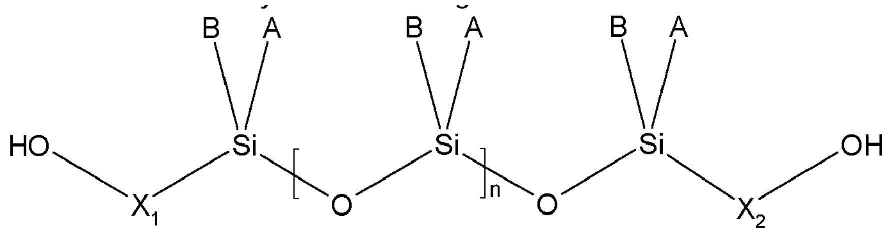

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

Gemäß einer weiteren bevorzugten Ausführungsform betrifft die Erfindung auch ein Verfahren zur Herstellung eines Polyurethans, insbesondere eines thermoplastischen Polyurethans, umfassend die Umsetzung der Komponenten (i) bis (iii):

(i) eine Diisocyanatzusammensetzung, welche mindestens 4,4'-MDI umfasst;

(ii) eine Polyolzusammensetzung, umfassend

(ii.1) mindestens ein Polyetherdiol, bevorzugt PTHF, mit einem zahlenmittleren Molekulargewicht $M_n$ im Bereich von 500 bis 3000 g/mol,

(ii.2) mindestens ein Polysiloxan der allgemeinen Formel Ia

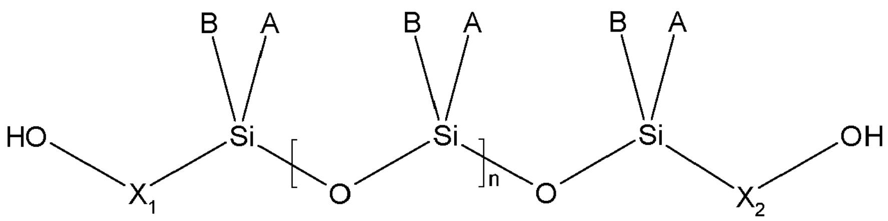

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,2-Ethandiol oder 2,4-Diamino-3,5-di(methylthio)toluol, bevorzugt 2,4-Diamino-3,5-di(methylthio)toluol, umfasst.

In einer bevorzugten Ausführungsform des Verfahrens zur Herstellung eines Polyurethans, insbesondere eines thermoplastischen Polyurethans, umfasst es die Umsetzung der Komponenten (i) bis (iii) und zusätzlich
(iv) einer Antioxidantzusammensetzung, wobei die Antioxidantzusammensetzung mindestens ein Antioxidant ausgewählt aus den sterisch gehinderten Phenole, bevorzugt ausgewählt aus den sterisch gehinderten Phenolen, welche mindestens in ortho-Position benachbart zur OH-Gruppe eine tert-Butylgruppe aufweisen, weiter bevorzugt ausgewählt aus der Gruppe bestehend aus Ethylenbis(oxyethylen)bis-(3-(5-tert-butyl-4-hydroxy-m-tolyl)-propionat) (Irganox 245 FF, CAS-Nummer 36443-68-2), Octadecyl-3-(3,5-di-tert-butyl-4-hydroxyphenyl)-propionat (Irganox 1076, CAS-Nummer 2082-79-3), Octyl-3,5-di-tert-butyl-4-hydroxy-hydrocinnamat (Irganox 1135, CAS-Nummer 125643-61-0), N,N'-Hexan-1,6-diylbis[3-(3,5-di-tert-butyl-4-hydroxyphenylpropionamid] (Irganox 1098, CAS-Nummer 23128-74-7), Pentaerythritol tetrakis(3-(3,5-di-tert-butyl-4-hydroxyphenyl)propionat) (Irganox 1010, CAS-Nummer 6683-19-8) und 3,5-Bis(tert-butyl)-4-hydroxytoluol (BHT, CAS-Nummer 128-37-0), weiter bevorzugt ausgewählt aus der Gruppe bestehend aus Pentaerythritol tetrakis(3-(3,5-di-tert-butyl-4-hydroxyphenyl)propionat), N,N'-Hexan-1,6-diylbis[3-(3,5-di-tert-butyl-4-hydroxy-

phenylpropionamid] und einer Mischung aus Pentaerythritol tetrakis(3-(3,5-di-tert-butyl-4-hydroxyphenyl)propionat) und N,N'-Hexan-1,6-diylbis[3-(3,5-di-tert-butyl-4-hydroxyphenylpropionamid], enthält.

Bezüglich bevorzugter Ausführungsformen des Verfahrens, geeigneter Einsatzstoffe oder Mischungsverhältnisse wird auf die obigen Ausführungen verwiesen, die entsprechend gelten.

Die Umsetzung der Komponenten (i) bis (iii) kann prinzipiell unter an sich bekannten Reaktionsbedingungen durchgeführt werden. Die Umsetzung kann dabei diskontinuierlich oder auch kontinuierlich erfolgen, beispielsweise in einem Bandverfahren oder einem Reaktionsextrusionsverfahren. Geeignete Verfahren werden beispielsweise beschrieben in EP 0 922 552 A1 oder WO 2006/082183 A1. Gemäß einer bevorzugten Ausführungsform wird die Umsetzung der Komponenten (i) bis (iii) unter erhöhten Temperaturen als Raumtemperatur durchgeführt. Das Erwärmen kann erfindungsgemäß auf jede dem Fachmann bekannte geeignete Art erfolgen. Erfindungsgemäß ist es auch möglich, dass das Verfahren weitere Schritte umfasst, beispielsweise eine Vorbehandlung der Komponenten oder eine Nachbehandlung des erhaltenen Polyurethans, insbesondere des thermoplastischen Polyurethans wie beispielsweise Tempern.

Weiter betrifft die vorliegende Erfindung daher auch die Verwendung eines Polyurethans, insbesondere eines thermoplastischen Polyurethans, wie zuvor beschrieben oder eines Polyurethans, insbesondere eines thermoplastischen Polyurethans erhältlich oder erhalten nach dem erfindungsgemäßen Verfahren zur Herstellung eines Formkörpers, eines Spritzgussprodukts, eines Extrusionsprodukts, oder einer Folie.

Die Eigenschaften der erfindungsgemäßen Polyurethane, insbesondere der thermoplastischen Polyurethane, machen sie geeignet für Anwendungen in diversen Bereichen. Die erfindungsgemäßen thermoplastischen Polyurethane weisen beispielweise eine verbesserte Haptik und eine Hydrophibizität vergleichbar der von reinen Silikonkunststoffen auf, was sie besonders geeignet für die Verwendung in Konsumentenartikel, bevorzugt ausgewählt aus der Gruppe bestehend aus Bekleidungsartikel, insbesondere Schuh und Schuhbestandteil, insbesondere Mittelsohle, Außensohle und Schnürsenkel; Schmuck und Schmuckbestandteil, insbesondere für ein Smartdevice oder Überwachungselektronik (insbesondere zur Überwachung von Körperfunktionen wie Herzschlag, Temperatur), bevorzugt ausgewählt aus der Gruppe bestehend aus Armband, Armbandbestandteil, Umhängeband und Umhängebandbestandteil, Körpergurt und Körpergurtbestandteil, Brille und Brillenbestandteil; Sportzubehörartikel, insbesondere Sportband, Dehnungsband; Dämpfungsmaterial; Schaumstoffpartikel; gewebter Artikel; nicht-gewebter Artikel; Reinigungsartikeln für mobile Fahr- oder Fluggeräte, insbesondere Scheibenwischer; medizinischer Artikel, insbesondere Verbandsartikel oder Schlauch, macht. Ein Smartdevice ist hierbei ein elektronisches Gerät, welches kabellos mit einem anderen Gerät oder Netzwerk vernetzt oder vernetzbar ist, beispielsweise Geräte der Unterhaltungselektronik, Telefon, Smartwatch.

Weiterhin weisen die erfindungsgemäßen Polyurethane, insbesondere die thermoplastischen Polyurethane, gegenüber Standard-TPUs die kein Polysiloxan enthalten und eine vergleichbare Shore A Härte aufweisen, deutlich verbesserte mechanische Eigenschaften, insbesondere eine verbesserte Reißdehnung, Reißfestigkeit und Zugfestigkeit auf, ebenso ist der Abrieb signifikant geringer. Dies macht sie ebenfalls besonders geeignet für Anwendungen bei Konsumentenartikeln wie oben ausgeführt, beispielsweise Armband, aber auch bei Schutzartikeln wie beispielsweise Schutzfolie und Schutzhülle, insbesondere Handyhülle, Designelement für elektrische Bauteile, beispielsweise Laptopcover, Ipad-cover, Lautsprecher, Tragbarer Lautsprecher).

Erfindungsgemäß besonders bevorzugt ist die Verwendung der erfindungsgemäßen Polyurethane, insbesondere die thermoplastischen Polyurethane für Armband, Armbandbestandteil, Umhängeband und Umhängebandbestandteil, Körpergurt und Körpergurtbestandteil, insbesondere für ein Smartdevice oder für Überwachungselektronik. Ebenso besonders bevorzugt ist die Verwendung für Schutzartikel, bevorzugt Schutzhüllen oder Schutzfolien, weiter bevorzugt Handyhülle.

Desweiteren weisen die weisen die erfindungsgemäßen Polyurethane, insbesondere die thermoplastischen Polyurethane, eine deutlich verbesserte Hitzebeständigkeit auf, so werden ihre mechanischen Eigenschaften wie die Reißdehnung selbst bei längerer Anwendung höherer Temperaturen nur wenig beeinträchtigt, was sie besonders geeignet für alle Arten von Wärme ausgesetzten Artikeln, beispielsweise Kabelummantelungen oder Schläuche, wie beispielsweise in Automobilzubehörteilen, insbesondere Automobilkabelummantelungen oder -schläuchen macht. Hier ist es von besonderer Relevanz, dass das Material auch bei längerer Wärmewirkung formstabil bleibt und eine absolute Reißdehnung von mindestens 50% auch nach Wärmeeinwirkung aufweist. Selbst erfindungsgemäße Polyurethane, insbesondere thermoplastischen Polyurethane, welche eine geringere Shore-A-Härte (55A) aufweisen, zeigen in der thermischen Alterung nur eine geringe Verschlechterung der Reißdehnung - normale thermoplastische Polyurethane mit Shore A Härten unterhalb von 80 A schmelzen bei thermischer Alterung innerhalb weniger Minuten.

Weiter betrifft die vorliegende Erfindung daher auch die die Verwendung wie zuvor beschrieben für einen Artikel ausgewählt aus der Gruppe bestehend aus Schuh, Schuhbestandteil, Möbelteil, Kissen, Kisssenbestandteil, Matratze, Matratzenbestandteil, transdermales System, Bestandteil eines transdermalen Systems, insbesondere Pflaster, Bestandteil eines Pflasters, Automobilzubehörteil, insbesondere Automobilkabelummantelung oder -schlauch, Schmuck, Schmuckbestandteil, insbesondere Armband, Folie, insbesondere Fußbodenfolie, Skifolie oder Schutzfolie, und Schutzhülle.

Die Erfindung betrifft weiterhin einen Artikel, umfassend ein Polyurethan, insbesondere ein thermoplastisches

Polyurethan, wie zuvor beschrieben oder ein Polyurethan, insbesondere ein thermoplastisches Polyurethan, erhältlich oder erhalten nach einem Verfahren wie zuvor beschrieben.

Weiterer Gegenstand der vorliegenden Erfindung sind Partikelschäume auf Basis des erfindungsgemäßen Polyurethans, erhalten oder erhältlich aus einem Polyurethan, insbesondere einem thermoplastischen Polyurethan wie zuvor beschrieben. Partikelschäume (oder Partikelschaumstoffe, Partikelschaum) sowie daraus hergestellte Formkörper auf Basis von thermoplastischem Polyurethan oder anderen Elastomeren sind bekannt (z.B. WO 94/20568 A1, WO 2007/082838 A1, WO 2017/030835 A1, WO 2013/153190 A1, WO 2010/010010 A1) und vielfältig einsetzbar.

Partikelschaum oder Partikelschaumstoff im Sinne der vorliegenden Erfindung bezeichnet einen Schaumstoff in Form eines Partikels. Die Erfindung betrifft daher ebenso einen Schaumstoffpartikel auf Basis von Polyurethan, erhalten oder erhältlich aus einem Polyurethan, insbesondere einem thermoplastischen Polyurethan wie zuvor beschrieben.

Die Begriffe "Partikelschaum", "Partikelschaumstoff" bzw. "Schaumstoffpartikel" werden im Rahmen der vorliegenden Erfindung synonym verwendet.

Der mittlere Durchmesser des Partikelschaums bzw. des Schaumstoffpartikels liegt zwischen 0,2 bis 20, bevorzugt 0,5 bis 15 und insbesondere zwischen 1 bis 12 mm. Bei nicht kugelförmigen, z.B. länglichen oder zylinderförmigen Partikelschaum ist mit Durchmesser die längste Abmessung gemeint.

Die erfindungsgemäßen Partikelschäume weisen in der Regel eine Schüttdichte von 50 g/l bis 200 g/l, bevorzugt 60 g/l bis 180 g/l, besonders bevorzugt 80 g/l bis 150 g/l. Die Schüttdichte wird analog der DIN ISO 697 gemessen, wobei bei der Bestimmung der obigen Werte im Unterschied zur Norm anstelle eines Gefäßes mit 0,5 l Volumen ein Gefäß mit 10 l Volumen verwendet wird, da speziell bei den Schaumpartikeln mit niedriger Dichte und großer Masse eine Messung mit nur 0,5 l Volumen zu ungenau ist.

Der Begriff "Schaumstoffpartikel" im Rahmen der vorliegenden Erfindung bedeutet in einer Ausführungsform ein geschäumtes und/oder expandiertes Granulat mit einem Durchmesser größer als 1 mm.

Für die Herstellung eines Schaumstoffpartikels wird bevorzugt Polyurethan, insbesondere das thermoplastische Polyurethan wie zuvor beschrieben, verwendet, welches eine Härte im Bereich Shore 30A bis 98A oder im Bereich Shore 40D bis 64D, bevorzugt eine Härte im Bereich von Shore 30A bis 95A, weiter bevorzugt im Bereich von Shore 70A bis 95A, aufweist.

Die Schaumstoffpartikel können durch Imprägnierung des Polyurethans, insbesondere des thermoplastischen Polyurethans, wie zuvor beschrieben, mit einem Treibmittel in Suspension / in einem Autoklaven oder durch Schmelzeimprägnierung von aufgeschmolzenem thermoplastischen Polyurethan mit einem Treibmittel und anschließender Granulierung erhalten werden. Geeignete Verfahren zur Herstellung der Schaumstoffpartikel auf Basis thermoplastischer Elastomeren sind beispielsweise in WO 2005/023920 A1, WO 2007/082838 A1, WO 2013/153190 A1 und WO 2014/198779 A1 beschrieben.

Die Herstellung der Partikelschäume kann nach den gängigen im Stand der Technik bekannten Verfahren erfolgen durch

i. Bereitstellen des erfindungsgemäßen Polyurethans, insbesondere des thermoplastischen Polyurethans, wie zuvor beschrieben;
ii. Imprägnierung des Polyurethans, insbesondere des thermoplastischen Polyurethans, wie zuvor beschrieben, mit einem Treibmittel unter Druck;
iii. Expandieren des Polyurethans, insbesondere des thermoplastischen Polyurethans, wie zuvor beschrieben, mittels Druckabfall.

Die Treibmittelmenge beträgt bevorzugt 0,1 bis 40, insbesondere 0,5 bis 35 und besonders bevorzugt 1 bis 30 Gew.-Teile, bezogen auf 100 Gew.-Teile der eingesetzten Menge des Polyurethans, insbesondere des thermoplastischen Polyurethans, wie zuvor beschrieben.

Eine Ausführungsform des oben genannten Verfahrens umfasst

i. Bereitstellen des erfindungsgemäßen Polyurethans, insbesondere des thermoplastischen Polyurethans, wie zuvor beschrieben, in Form eines Granulates;
ii. Imprägnierung des Granulates mit einem Treibmittel unter Druck;
iii. Expandieren des Granulates mittels Druckabfall.

Eine weitere Ausführungsform des oben genannten Verfahrens umfasst einen weiteren Schritt:

i. Bereitstellen des erfindungsgemäßen Polyurethans, insbesondere des thermoplastischen Polyurethans, wie zuvor beschrieben, in Form eines Granulates;
ii. Imprägnierung des Granulates mit einem Treibmittel unter Druck;

iii. Reduzierung des Drucks auf Normaldruck ohne das Granulat aufzuschäumen, ggf. durch vorherige Reduzierung der Temperatur;
iv. Schäumen des Granulates durch eine Temperaturerhöhung.

Bevorzugt weist das Granulat hierbei einen durchschnittlichen minimalen Durchmesser von 0,2 - 10 mm auf (bestimmt über 3D Evaluierung des Granulates, z.B. über dynamic image analysis mit der Verwendung einer optischen Messapparatur mit Namen PartAn 3D von Microtrac).

Die einzelnen Granulate haben in der Regel eine mittlere Masse im Bereich von 0,1 bis 50 mg, bevorzugt im Bereich von 4 bis 40 mg und besonders bevorzugt im Bereich von 7 bis 32 mg. Diese mittlere Masse der Granulate (Partikelgewicht) wird als arithmetisches Mittel durch 3-maliges Wiegen von jeweils 10 Granulatpartikeln bestimmt.

Eine Ausführungsform des oben genannten Verfahrens umfasst die Imprägnierung des Granulates mit einem Treibmittel unter Druck und anschließende Expansion des Granulates in Schritt (ii) und (iii):

ii. Imprägnierung des Granulates in Gegenwart eines Treibmittels unter Druck bei erhöhten Temperaturen in einem geeigneten, geschlossenen Reaktionsgefäß (z.B. Autoklaven)
iii. schlagartiges Entspannen ohne Abkühlung

Hierbei kann die Imprägnierung in Schritt ii) in Gegenwart in Gegenwart von Wasser sowie optional Suspensionshilfsmitteln erfolgen oder nur in Anwesenheit des Treibmittels und Abwesenheit von Wasser.

Geeignete Suspensionshilfsmittel sind z.B. wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-%, bezogen auf das erfindungsgemäße Polyurethan, insbesondere das thermoplastischen Polyurethan, wie zuvor beschrieben, verwendet.

Die Imprägniertemperaturen liegen in Abhängigkeit von dem gewählten Druck im Bereich von 100-200°C, wobei der Druck in dem Reaktionsgefäß zwischen 2- 150 bar, bevorzugt zwischen 5 und 100 bar, besonders bevorzugt zwischen 20 und 60 bar beträgt, die Imprägnierdauer betragt im allgemeinen 0,5 bis 10 Stunden.

Die Durchführung des Verfahrens in Suspension ist dem Fachmann bekannt und z.B. ausführlich in der WO 2007/082838 A1 beschrieben.

Bei der Durchführung des Verfahrens in Abwesenheit des Treibmittels ist darauf zu achten, dass die Aggregation des Polymergranulates vermieden wird.

Geeignete Treibmittel für die Durchführung des Verfahrens in einem geeigneten geschlossenen Reaktionsgefäß sind z.B. organische Flüssigkeiten und Gase, die bei den Verarbeitungsbedingungen in einem gasförmigen Zustand vorliegen, wie Kohlenwasserstoffe oder anorganische Gase oder Gemische aus organischen Flüssigkeiten bzw. Gasen und anorganischen Gasen, wobei diese ebenfalls kombiniert werden können.
Geeignete Kohlenwasserstoffe sind beispielsweise halogenierte oder nicht halogenierte, gesättigte oder ungesättigte aliphatische Kohlenwasserstoffe, vorzugsweise nicht halogenierte, gesättigte oder ungesättigte aliphatische Kohlenwasserstoffe.
Bevorzugte organische Treibmittel sind gesättigte, aliphatische Kohlenwasserstoffe, insbesondere solche mit 3 bis 8 C-Atomen wie beispielsweise Butan oder Pentan.

Geeignete anorganische Gase sind Stickstoff, Luft, Ammoniak oder Kohlendioxid, vorzugsweise Stickstoff oder Kohlendioxid oder Mischungen aus den vorstehend genannten Gasen.

In einer weiteren Ausführungsform umfasst die Imprägnierung des Granulates mit einem Treibmittel unter Druck Verfahren und anschließende Expansion des Granulates in Schritt (ii) und (iii):

ii. Imprägnierung des Granulates in Gegenwart eines Treibmittels unter Druck bei erhöhten Temperaturen in einem Extruder
iii. Granulierung der aus dem Extruder austretenden Masse unter Bedingungen, die unkontrolliertes Aufschäumen verhindern:
Geeignete Treibmittel in dieser Verfahrensvariante sind flüchtige organische Verbindungen mit einem Siedepunkt bei Normaldruck 1013 mbar 35 von -25 bis 150, insbesondere -10 bis 125°C. Gut geeignet sind Kohlenwasserstoffe (bevorzugt halogenfrei), insbesondere C4-10-Alkane, beispielsweise die Isomere des Butans, Pentans, Hexans, Heptans und Octans, besonders bevorzugt iso-Pentan. Weitere mögliche Treibmittel sind außerdem sterisch anspruchsvollere Verbindungen oder funktionalisierte Kohlenwasserstoffe wie Alkohole, Ketone, Ester, Ether und organische Carbonate.

Hierbei wird das Polyurethan, insbesondere das thermoplastische Polyurethan, wie zuvor beschrieben, im Schritt (ii) in einem Extruder unter Aufschmelzen mit
dem Treibmittel unter Druck vermischt, welches dem Extruder zugeführt wird. Die treibmittelhaltige Mischung wird unter

Druck, vorzugsweise mit moderat kontrolliertem Gegendruck (z.B. Unterwassergranulierung) ausgepresst und granuliert. Hierbei schäumt der Schmelzstrang auf und man erhält durch Granulierung die Partikelschäume.

Die Durchführung des Verfahrens via Extrusion ist dem Fachmann bekannt und z.B. ausführlich in der WO2007/082838 A1 sowie der WO 2013/153190 A1 beschrieben.

Als Extruder kommen alle üblichen Schneckenmaschinen in Betracht, insbesondere Einschnecken- und Doppelschneckenextruder (z.B. Typ ZSK von Fa. Werner & Pfleiderer), Co-Kneter, Kombiplast-Maschinen, MPC-Knetmischer, FCM-Mischer, KEX-Knetschneckenextruder und Scherwalzenextruder, wie sie z.B. in Saechtling (Hg.), Kunststoff-Taschenbuch, 27. Auflage, Hanser-Verlag München 1998, Kap. 3.2.1 und 3.2.4, beschrieben sind. Der Extruder wird üblicherweise bei einer Temperatur betrieben, bei der das MATERIAL als Schmelze vorliegt, beispielsweise bei 120°C bis 250°C, insbesondere 150 bis 210°C und einem Druck nach der Zugabe des Treibmittels von 40 bis 200 bar, bevorzugt 60 bis 150 bar, besonders bevorzugt 80 bis 120 bar um eine Homogenisierung des Treibmittels mit der Schmelze zu gewährleisten.

Hierbei kann die Durchführung in einem Extruder oder einer Anordnung aus einem oder mehreren Extrudern erfolgen. So können beispielsweise in einem ersten Extruder die Komponenten aufgeschmolzen und geblendet werden sowie ein Treibmittel injiziert werden. Im zweiten Extruder wird die imprägnierte Schmelze homogenisiert und die Temperatur und oder der Druck eingestellt. Werden beispielsweise drei Extruder miteinander kombiniert, kann ebenfalls das vermischen der Komponenten sowie die Injizierung des Treibmittels auf zwei unterschiedliche Verfahrensteile aufgeteilt werden. Wird wie bevorzugt nur ein Extruder verwendet, so werden alle Prozessschritte, aufschmelzen, vermischen, Injektion des Treibmittels, Homogenisierung und Einstellen der Temperatur und oder des Drucks in einem Extruder durchgeführt.

Alternativ kann nach den in WO2014/150122 A1 oder WO2014/150124 A1 beschriebenen Methoden aus dem Granulat direkt der entsprechende, ggf. sogar schon gefärbte Partikelschaum dadurch hergestellt werden, dass das entsprechende Granulat mit einer superkritischen Flüssigkeit durchtränkt wird, aus der superkritische Flüssigkeit entfernt wird gefolgt von (a) Eintauchen des Artikels in einem erhitzten Fluidum oder (b) Bestrahlen des Artikels mit energetische Strahlung (z.B. Infrarot- oder Mikrowellenbestrahlung).

Geeignete superkritische Flüssigkeiten sind z.B. die in der WO2014/150122 A1 oder beschrieben, z.B. Kohlendioxid, Stickstoffdioxid, Ethan, Ethylen, Sauerstoff oder Stickstoff vorzugsweise Kohlendioxid oder Stickstoff.

Die superkritische Flüssigkeit kann hierbei auch eine polare Flüssigkeit mit einem Hildebrand-Löslichkeitsparameter gleich oder größer als 9 MPa-1/2 enthalten.

Hierbei kann das superkritischen Fluidums oder das erhitzten Fluidums auch einen Farbstoff enthalten, wodurch ein gefärbter, geschäumter Artikel erhalten wird.

In einer Ausführungsform betrifft die Erfindung ein Verfahren zur Herstellung von Schaumstoffpartikeln, wobei ein Polyurethan, insbesondere ein thermoplastisches Polyurethan, wie zuvor beschrieben, aufgeschmolzen, mit einem Treibmittel versetzt und die treibmittelhaltige Schmelze unter Aufschäumen granuliert wird. Bevorzugt erfolgt dies bei einem Druck im Bereich von 1 bis 15 bar, weiter bevorzugt bei einem Druck im Bereich von 5 bis 15 bar. Bevorzugt wird ein Extrusionsverfahren eingesetzt. Die Erfindung betrifft ebenso in einer Ausführungsform ein Verfahren zur Herstellung von Schaumstoffpartikeln wobei ein Polyurethan, insbesondere ein thermoplastisches Polyurethan, wie zuvor beschrieben, bei einem Druck im Bereich von 1 bis 15 bar, bevorzugt im Bereich von 1 bis 5 bar, in Gegenwart eines Treibmittels expandiert wird. Bevorzugt erfolgt dieses Verfahren in einem geschlossenen System, weiter bevorzugt in einem Autoklaven (Kesselverfahren).

Weiterer Gegenstand der vorliegenden Erfindung ist ein Formkörper hergestellt aus den erfindungsgemäßen Partikelschäumen.

Die Herstellung der entsprechenden Formkörper kann nach dem Fachmann bekannten Methoden erfolgen.

Ein hierbei bevorzugtes Verfahren zur Herstellung eines Schaumstoffformteils umfasst die folgenden Schritte:

(x) Einbringen der erfindungsgemäßen Partikelschäume in einer entsprechenden Form,
(y) Fusionierung der erfindungsgemäßen Partikelschäume aus Schritt (x).

Die Fusionierung in Schritt (y) erfolgt vorzugsweise in einer geschlossenen Form, wobei die Fusionierung durch Gase wie Wasserdampf, Heißluft (wie z.B. in der EP 1 979 401 B1 beschrieben) oder energetische Strahlung (Mikrowellen oder Radiowellen) erfolgen kann.

Die Temperatur bei dem Fusionieren des Partikelschaumes liegt bevorzugt unterhalb oder nahe an der Schmelztemperatur des Polymers aus dem der Partikelschaum hergestellt wurde. Für die gängigen Polymere liegt demnach die Temperatur zur Fusionierung des Partikelschaumes zwischen 100°C und 180°C, bevorzugt zwischen 120 und 150 °C.

Hierbei können Temperaturprofile / Verweilzeiten individuell ermittelt werden, z.B. in Analogie zu den in der US 2015/0337102 oder EP 2 872 309 B1 beschriebenen Verfahren.

Die Verschweißung über energetische Strahlung erfolgt im Allgemeinen im Frequenzbereich von Mikrowellen oder Radiowellen, ggf. in Gegenwart von Wasser oder anderen polaren Flüssigkeiten, wie z.B. polare Gruppen aufweisende, mikrowellenabsorbierende Kohlenwasserstoffe (wie z.B. Ester von Carbonsäuren und Diolen oder Triolen oder Glycole und flüssige Polyethylenegklycole) und kann in Analogie zu den in der EP 3 053 732 A1 oder WO 2016/146537 A1 beschriebenen Verfahren erfolgen.

Die Erfindung betrifft in einer Ausführungsform Partikelschaumstoffe, erhältlich durch Verschweißen von Schaumstoffpartikeln wie zuvor beschrieben oder von Schaumstoffpartikeln erhalten oder erhältlich nach dem Verfahren wie zuvor beschrieben durch Wasserdampf oder Einstrahlung energetischer Strahlung im Bereich von 1 kHz bis 1 THz, bevorzugt von elektromagnetischer Strahlung, insbesondere Strahlung im Radiofrequenzbereich (9 kHz bis 1 THz).

Die Erfindung betrifft weiterhin Partikelschaumstoffe, erhältlich durch Verkleben von Schaumstoffpartikeln wie zuvor beschrieben oder von Schaumstoffpartikeln erhalten oder erhältlich nach dem Verfahren wie zuvor beschrieben mit Klebstoffen.

Wie oben ausgeführt, kann der Partikelschaum auch Farbstoffe enthalten. Hierbei kann die Zugabe von Farbstoffen über verschiedene Wege erfolgen.

In einer Ausführungsform können die hergestellten Partikelschäume nach Herstellung gefärbt werden. Hierbei werden die entsprechenden Partikelschäume mit einer einen Farbstoff enthaltenen Trägerflüssigkeit kontaktiert, wobei die Trägerflüssigkeit (TF) eine Polarität aufweist, die geeignet ist, dass eine Sorption der Trägerflüssigkeit in den Partikelschaum erfolgt. Die Durchführung kann in Analogie zu den in der EP Anmeldung mit der Anmeldenummer 17198591.4 beschriebenen Methoden erfolgen.

Geeignete Farbstoffe sind zum Beispiel anorganische oder organische Pigmente. Geeignete natürliche oder synthetische anorganische Pigmente sind zum Beispiel Ruß, Graphit, Titanoxide, Eisenoxide, Zirkonoxide, Kobaltoxidverbindungen, Chromoxidverbindungen, Kupferoxidverbindungen. Geeignete organischen Pigmente sind zum Beispiel Azopigmente und polycyclische Pigmente.

In einer weiteren Ausführungsform kann die Farbe bei der Herstellung des Partikelschaums zugegeben werden. Beispielsweise kann der Farbstoff bei der Herstellung des Partikelschaums über Extrusion in den Extruder hinzugefügt werden.

Alternativ kann bereits gefärbtes Material als Ausgangsmaterial für die Herstellung des Partikelschaums verwendet werden, welches extrudiert oder im geschlossenen Gefäß nach den oben genannten Verfahren expandiert wird.

Weiterhin kann bei dem in der WO 2014/150122 A1 beschriebenen Verfahren die superkritische Flüssigkeit oder die erhitzte Flüssigkeit einen Farbstoff enthalten.

Dichte und Kompressionseigenschaften der hergestellten Formkörper stehen in einem Zusammenhang. Vorteilhaft liegt die Dichte der hergestellten Formteile zwischen 75 bis 375 kg/m$^3$, vorzugsweise zwischen 100 bis 300 kg/m$^3$, besonders bevorzugt zwischen 150 bis 200 kg/m$^3$ (DIN EN ISO 845, Oktober 2009).

Das Verhältnis der Dichte des Formteils zu der Schüttdichte der erfindungsgemäßen Partikelschäume beträgt dabei im Allgemeinen zwischen 1,5 und 2,5, bevorzugt bei 1,8 bis 2,0.

Die Eigenschaften der erfindungsgemäßen Schaumstoffpartikel bzw. der Partikelschaumstoffe machen sie geeignet für Anwendungen in diversen Bereichen.

Gegenstand der Erfindung ist in einer Ausführungsform die Verwendung eines erfindungsgemäßen Partikelschaums für die Herstellung eines Formkörpers für Schuhzwischensohlen, Schuheinlegesohlen, Schuhkombisohlen, Fahrradsätteln, Fahrradreifen, Dämpfungselementen, Polsterungen, Matratzen, Unterlagen, Griffen, Schutzfolien, in Bauteilen im Automobilinnen- und -außenbereich, in Bällen und Sportgeräten oder als Bodenbelag, insbesondere für Sportflächen, Leichtathletiklauf-bahnen, Sporthallen, Kinderspielplätze und Gehwegen.

In einer Ausführungsform werden die Schaumstoffpartikels für Anwendungen aus den Bereichen Sport, Bekleidung, Bau, Automobil, Elektronik verwendet. Die erfindungsgemäßen Schaumstoffpartikel bzw. Partikelschaumstoffe weisen beispielweise eine verbesserte Schmutzabweisung auf, was sie besonders geeignet für die Verwendung in Konsumentenartikel, bevorzugt ausgewählt aus der Gruppe bestehend aus Bekleidungsartikel, insbesondere Schuh und Schuhbestandteil, insbesondere Mittelsohle,und Außensohle; Schmuck und Schmuckbestandteil, insbesondere für ein Smartdevice oder Überwachungselektronik (insbesondere zur Überwachung von Körperfunktionen wie Herzschlag, Temperatur), bevorzugt ausgewählt aus der Gruppe bestehend aus Armband, Armbandbestandteil, Umhängeband und Umhängebandbestandteil, Körpergurt und Körpergurtbestandteil, Brille und Brillenbestandteil; Sportzubehörartikel, insbesondere Sportband, Dehnungsband; Dämpfungsmaterial; Reinigungsartikeln für mobile Fahr- oder Fluggeräte, insbesondere Scheibenwischer; medizinischer Artikel macht. Ein Smartdevice ist hierbei ein elektronisches Gerät, welches kabellos mit einem anderen Gerät oder Netzwerk vernetzt oder vernetzbar ist, beispielsweise Geräte der Unterhaltungselektronik, Telefon, Smartwatch.

Die vorliegende Erfindung wird durch die folgenden Ausführungsformen und Kombinationen von Ausführungsformen, die sich aus den entsprechenden Rückbezügen und Verweisen ergeben, näher illustriert. Insbesondere ist dabei anzumerken, dass in jedem Fall, in dem ein Bereich von Ausführungsformen benannt ist, beispielsweise im Kontext eines Ausdrucks wie "Verfahren gemäß einer der Ausführungsformen 1 bis 4" jede Ausführungsform in diesem Bereich als explizit für den Fachmann offenbart gemeint ist, d.h. die Formulierung dieses Ausdrucks für den Fachmann als synonym zu "Verfahren gemäß einer der Ausführungsformen 1, 2, 3 und 4" zu verstehen ist.

1. Polyurethan, insbesondere thermoplastisches Polyurethan, erhältlich oder erhalten durch Umsetzung von mindestens den Komponenten (i) bis (ii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan aufweisen zwei endständige gegenüber Isocyanaten reaktive Funktionalitäten ausgewählt aus der Gruppe bestehend aus Thiogruppe, Hydroxylgruppe und Aminogruppe.

2. Polyurethan, insbesondere thermoplastisches Polyurethan, erhältlich oder erhalten durch Umsetzung von mindestens den Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan aufweisen zwei endständige gegenüber Isocyanaten reaktive Funktionalitäten ausgewählt aus der Gruppe bestehend aus Thiogruppe, Hydroxylgruppe und Aminogruppe;

(iii) eine Kettenverlängererzusammensetzung.

3. Polyurethan, insbesondere thermoplastisches Polyurethan, gemäß Ausführungsform 1 oder 2, aufweisend eine Schmelze-Massefließrate bestimmt nach DIN EN ISO 1133 (Stand März 2012) gemessen bei einer Temperatur im Bereich von 190 bis 220°C und bei einer Masse im Bereich von 1 bis 30 kg im Bereich von 20 bis 350 g/10min.

4. Polyurethan, insbesondere thermoplastisches Polyurethan, gemäß einer der Ausführungsformen 1 bis 3, erhältlich oder erhalten durch Umsetzung von mindestens den Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,,
(ii.2) mindestens ein Polysiloxan der allgemeinen Formel I

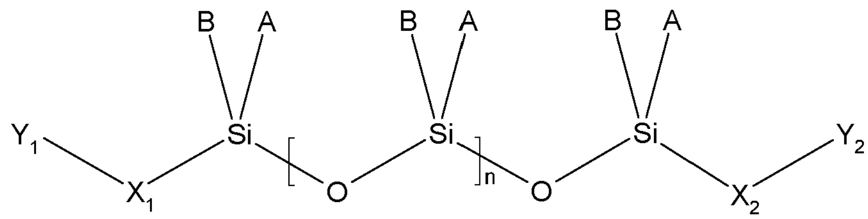

(I),

wobei n eine ganze Zahl im Bereich von 1 bis 250 ist, A und B unabhängig voneinander ausgewählt sind aus der Gruppe der C1-C20-Alkylgruppen; $X_1$, ausgewählt ist aus der Gruppe bestehend aus $(CH_2-CH_2-O)_m$-Gruppe, $(CH_2-CH_2-CH_2-O)_m$-Gruppe, $(CH_2-CHCH_3-O)_m$-Gruppe, $(CH_2)_m$-O-Gruppe und $(CH_2)_m$-Gruppe, $X_2$ ausgewählt ist aus der Gruppe bestehend aus $(O-CH_2-CH_2)_m$-Gruppe, $(O-CHCH_3-CH_2)_m$-Gruppe, $(O-CH_2-CH_2-CH_2)_m$-Gruppe, O-$(CH_2)_m$-Gruppe und - $(CH_2)_m$-Gruppe, wobei m für $X_1$, $X_2$ jeweils unabhängig eine ganze Zahl im Bereich von 1 bis 100 ist; und $Y_1$, $Y_2$ unabhängig voneinander ausgewählt sind aus der Gruppe bestehend aus Thiogruppe, Hydroxylgruppe und Aminogruppe;

(iii) eine Kettenverlängererzusammensetzung.

5. Polyurethan, insbesondere thermoplastisches Polyurethan, gemäß einer der Ausführungsformen 1 bis 4, erhältlich

oder erhalten durch Umsetzung von mindestens den Komponenten (i) bis (iii):

(i) eine Diisocyanatzusammensetzung;
(ii) eine Polyolzusammensetzung, umfassend

(ii.1) mindestens ein zweiwertiges Polyester- oder Polyetherdiol mit einem zahlenmittleren Molekulargewicht im Bereich von 500 bis 3000 g/mol,
(ii.2) mindestens ein Polysiloxan der allgemeinen Formel I

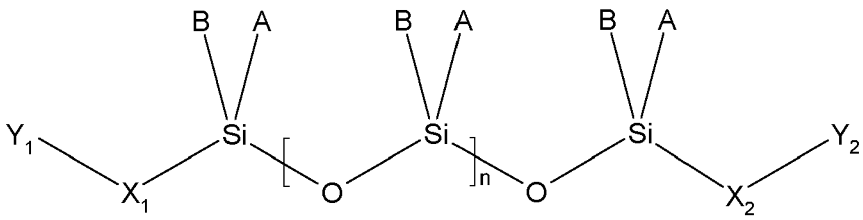

(I),

wobei n eine ganze Zahl im Bereich von 1 bis 250 ist, A und B unabhängig voneinander ausgewählt sind aus der Gruppe der C1-C20-Alkylgruppen; $X_1$, ausgewählt ist aus der Gruppe bestehend aus $(CH_2\text{-}CH_2\text{-}O)_m$-Gruppe, $(CH_2\text{-}CH_2\text{-}CH_2\text{-}O)_m$-Gruppe, $(CH_2\text{-}CHCH_3\text{-}O)_m$-Gruppe, $(CH_2)_m$-O-Gruppe und $(CH_2)_m$-Gruppe, $X_2$ausgewählt ist aus der Gruppe bestehend aus $(O\text{-}CH_2\text{-}CH_2)_m$-Gruppe, $(O\text{-}CHCH_3\text{-}CH_2)_m$-Gruppe, $(O\text{-}CH_2\text{-}CH_2\text{-}CH_2)_m$-Gruppe, $O\text{-}(CH_2)_m$-Gruppe und $-(CH_2)_m$-Gruppe, wobei m für $X_1$, $X_2$ jeweils unabhängig eine ganze Zahl im Bereich von 1 bis 100 ist; und $Y_1$, $Y_2$ unabhängig voneinander ausgewählt sind aus der Gruppe bestehend aus Thiogruppe, Hydroxylgruppe und Aminogruppe;

(iii) eine Kettenverlängererzusammensetzung.

6. Polyurethan, insbesondere thermoplastisches Polyurethan, gemäß Ausführungsform 4 oder 5, wobei der Index n des mindestens einen Polysiloxans gemäß (ii.2) eine ganze Zahl im Bereich von 3 bis 50 oder im Bereich von 100 bis 240, ist.

7. Polyurethan, insbesondere thermoplastisches Polyurethan, gemäß einer der Ausführungsformen 4 bis 6, wobei A und B des Polysiloxans gemäß (ii.2) unabhängig voneinander ausgewählt sind aus der Gruppe der C1- bis C5-Alkylgruppen, bevorzugt A und B jeweils gleich sind und ausgewählt sind aus der Gruppe der C1- bis C5-Alkylgruppen, wobei weiter bevorzugt A und B beide eine Methylgruppe sind.

8. Polyurethan, insbesondere thermoplastisches Polyurethan, gemäß einer der Ausführungsformen 4 bis 7, wobei der Index m für $X_1$, $X_2$ des Polysiloxans gemäß (ii.2) jeweils unabhängig eine ganze Zahl im Bereich von 1 bis 50, bevorzugt im Bereich von 1 bis 20, weiter bevorzugt im Bereich von 1 bis 15, ist.

9. Polyurethan, insbesondere thermoplastisches Polyurethan, gemäß einer der Ausführungsformen 4 bis 8, wobei $Y_1$ und $Y_2$ des Polysiloxans gemäß (ii.2) beide eine Hydroxylgruppe oder beide eine Aminogruppe sind.

10. Polyurethan, insbesondere thermoplastisches Polyurethan, gemäß einer der Ausführungsformen 4 bis 9, wobei $X_1$ des Polysiloxans gemäß (ii.2) eine $(CH_2\text{-}CH_2\text{-}O)_m$-Gruppe oder eine $(CH_2\text{-}CH_2\text{-}CH_2\text{-}O)_m$-Gruppe oder eine $(CH_2\text{-}CHCH_3\text{-}O)_m$-Gruppe ist, $X_2$ des Polysiloxans gemäß (ii.2) eine $(O\text{-}CHCH_3\text{-}CH_2)_m$-Gruppe oder eine $(O\text{-}CH_2\text{-}CH_2)_m$-Gruppe oder eine $(O\text{-}CH_2\text{-}CH_2\text{-}CH_2)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind.

11. Polyurethan, insbesondere thermoplastisches Polyurethan, gemäß einer der Ausführungsformen 4 bis 10, wobei der Index n des mindestens einen Polysiloxans gemäß (ii.2) eine ganze Zahl im Bereich von 3 bis 50, bevorzugt im Bereich von 5 bis 40, weiter bevorzugt im Bereich von 10 bis 20, ist; $X_1$ des Polysiloxans gemäß (ii.2) eine $(CH_2\text{-}CH_2\text{-}O)_m$-Gruppe ist, $X_2$ des Polysiloxans gemäß (ii.2) eine $(O\text{-}CH_2\text{-}CH_2)_m$-Gruppe ist, wobei m für $X_1$, $X_2$ jeweils unabhängig eine ganze Zahl im Bereich von 2 bis 20, weiter bevorzugt im Bereich von 3 bis 15, ist; und $Y_1$ und $Y_2$ beide eine Hydroxylgruppe sind.

12. Polyurethan, insbesondere thermoplastisches Polyurethan, gemäß einer der Ausführungsformen 4 bis 10, wobei

der Index n des mindestens einen Polysiloxans gemäß (ii.2) eine ganze Zahl im Bereich von 100 bis 240, bevorzugt im Bereich von 110 bis 235, ist; $X_1$ und $X_2$ des Polysiloxans gemäß (ii.2) beide eine $(CH_2)_m$-Gruppe sind, wobei m eine ganze Zahl im Bereich von 1 bis 50, weiter bevorzugt im Bereich von 2 bis 10, weiter bevorzugt im Bereich von 2 bis 5, weiter bevorzugt 3, ist, und $Y_1$, $Y_2$ des Polysiloxans gemäß (ii.2) beide eine Aminogruppe sind.

13. Polyurethan, insbesondere thermoplastisches Polyurethan, gemäß einer der Ausführungsformen 4 bis 10, wobei der Index n des mindestens einen Polysiloxans gemäß (ii.2) eine ganze Zahl im Bereich von 3 bis 50, weiter bevorzugt im Bereich von 20 bis 40, ist; $X_1$ und $X_2$ des Polysiloxans gemäß (ii.2) beide eine $(CH_2)_m$-Gruppe sind, wobei m eine ganze Zahl im Bereich von 1 bis 50, weiter bevorzugt im Bereich von 2 bis 10, weiter bevorzugt im Bereich von 2 bis 5, weiter bevorzugt 3,ist, und $Y_1$, $Y_2$ des Polysiloxans gemäß (ii.2) beide eine Aminogruppe sind.

14. Polyurethan, insbesondere thermoplastisches Polyurethan, gemäß einer der Ausführungsformen 4 bis 10, wobei der Index n des mindestens einen Polysiloxans gemäß (ii.2) eine ganze Zahl im Bereich von 3 bis 50, bevorzugt im Bereich von 10 bis 30, ist; $X_1$ und $X_2$ des Polysiloxans gemäß (ii.2) beide eine $(CH_2)_m$-Gruppe sind, wobei m eine ganze Zahl im Bereich von 1 bis 20, bevorzugt im Bereich von 1 bis 10, weiter bevorzugt 1, ist, und $Y_1$, $Y_2$ des Polysiloxans gemäß (ii.2) beide eine Hydroxylgruppe sind.

15. Polyurethan, insbesondere thermoplastisches Polyurethan, gemäß einer der Ausführungsformen 2 bis 14, wobei die Kettenverlängererzusammensetzung gemäß (iii) mindestens eine Verbindung umfasst, welche mindestens zwei gegenüber Isocyanaten reaktive funktionelle Gruppen, bevorzugt zwei gegenüber Isocyanaten reaktive funktionelle Gruppen, aufweist, wobei die gegenüber Isocyanaten reaktiven funktionellen Gruppen bevorzugt ausgewählt sind aus der Gruppe von Hydroxylgruppe, Aminogruppe und Thiolgruppe.

16. Polyurethan, insbesondere thermoplastisches Polyurethan, gemäß Ausführungsform 15, wobei die mindestens eine Verbindung, welche gegenüber Isocyanaten reaktive funktionelle Gruppen aufweist, ausgewählt ist aus der Gruppe bestehend aus 1,2-Ethandiol, 1,4-Butandiol, 1,6-Hexandiol und 2,4-Diamino-3,5-di(methylthio)toluol, und bevorzugt 1,4-Butandiol ist.

17. Polyurethan, insbesondere thermoplastisches Polyurethan, gemäß einer der Ausführungsformen 1 bis 16, wobei das mindestens eine Polysiloxan gemäß (ii.2) in einem Anteil im Bereich von 0,1 bis 50 Gewichts-%, bevorzugt im Bereich von 1 bis 30 Gewichts-%, weiter bevorzugt im Bereich von 5 bis 20 Gewichts-%, bezogen auf das Gesamtgewicht aller Komponenten (ii.1) und (ii.2) enthalten ist.

18. Polyurethan, insbesondere thermoplastisches Polyurethan, gemäß einer der Ausführungsformen 1 bis 17, wobei das Polyester- oder Polyetherdiol gemäß (ii.1) ausgewählt ist aus der Gruppe der zweiwertigen Polyesterdiole und Polyetherdiole, bevorzugt aus der Gruppe bestehend aus Polyethylenglykol, Polypropylenglykol, Polyadipaten, Polycarbonat(diol)en und Polycaprolactonen und Polytetrahydrofuran (PTHF), bevorzugt aus der Gruppe von Polyesterdiolen und PTHF, wobei das Polyesterdiol bevorzugt aus Adipinsäure, 1,4-Butandiol und 1,6-Hexandiol aufgebaut ist; weiter bevorzugt PTHF, wobei das PTHF bevorzugt ein zahlenmittleres Molekulargewicht Mn im Bereich von 500 bis 3000 g/mol, bevorzugt im Bereich von 1000 bis 2000 g/mol, aufweist.

19. Polyurethan, insbesondere thermoplastisches Polyurethan, gemäß einer der Ausführungsformen 1 bis 18, wobei die Polyisocyanatzusammensetzung gemäß (i) mindestens ein Polyisocyanat ausgewählt aus den Diisocyanaten, bevorzugt ausgewählt aus der Gruppe bestehend aus 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI) und 4,4'-, 2,4'- und 2,2'-Methylendicyclohexyldiisocyanat (H12MDI) enthält.

20. Polyurethan, insbesondere thermoplastisches Polyurethan, gemäß einer der Ausführungsformen 2 bis 19, wobei das Polyurethan einen Hartsegmentanteil im Bereich von 10 bis 50 Gewichts-%, bevorzugt von 17 bis 30 Gewichts-%, bezogen auf das Gesamtgewicht aller Komponenten (i), (ii), (iii), aufweist.

21. Polyurethan, insbesondere thermoplastisches Polyurethan, gemäß einer der Ausführungsformen 2 bis 20, wobei das Polyurethan eine Härte im Bereich von Shore 30AA bis 98A oder im Bereich von Shore 40D bis 64D, bevorzugt im Bereich von Shore 30A bis 95A, weiter bevorzugt im Bereich von Shore 70A bis 95A, aufweist.

22. Polyurethan, insbesondere thermoplastisches Polyurethan, gemäß einer der Ausführungsformen 1 bis 21, erhältlich oder erhalten durch Umsetzung von mindestens den Komponenten (i) bis (iii):

(i) eine Diisocyanatzusammensetzung, welche mindestens 4,4'-MDI oder HDI umfasst;
(ii) eine Polyolzusammensetzung, umfassend

(ii.1) mindestens ein Polyetherdiol, bevorzugt PTHF, oder ein Polyesterdiol, wobei das Polyether- oder Polyesterdiol ein zahlenmittleres Molekulargewicht $M_n$ im Bereich von 500 bis 3000 g/mol aufweist,
(ii.2) mindestens ein Polysiloxan der allgemeinen Formel Ia

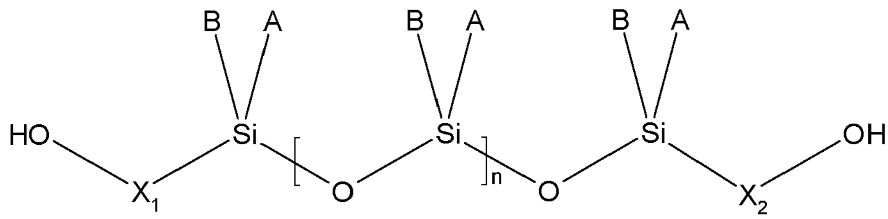

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ jeweils unabhängig eine ganze Zahl im Bereich von 3 bis 15 ist;

(iii) eine Kettenverlängererzusammensetzung, welche mindestens ein Diol oder Diamin ausgewählt aus der Gruppe bestehend aus 1,4-Butandiol, *1,6*-Hexandiol, 1,2-Ethandiol und 2,4-Diamino-3,5-di(methylthio)toluol, umfasst.

23. Polyurethan, insbesondere thermoplastisches Polyurethan, gemäß einer der Ausführungsformen 1 bis 22, erhältlich oder erhalten durch Umsetzung von mindestens den Komponenten (i) bis (iii):

(i) eine Diisocyanatzusammensetzung, welche mindestens MDI umfasst;
(ii) eine Polyolzusammensetzung, umfassend

(ii.1) mindestens ein Polyetherdiol, bevorzugt PTHF, welches ein zahlenmittleres Molekulargewicht $M_n$ im Bereich von 500 bis 3000 g/mol aufweist,
(ii.2) mindestens ein Polysiloxan der allgemeinen Formel Ia

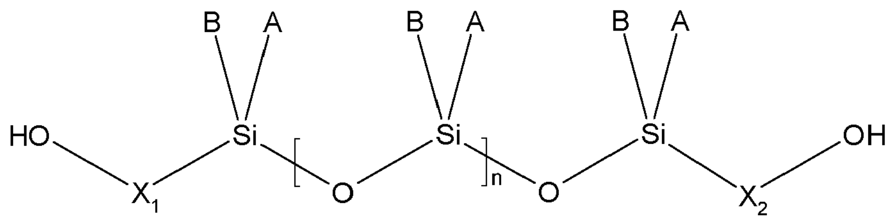

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butanidolumfasst;

24. Polyurethan, insbesondere thermoplastisches Polyurethan, gemäß Ausführungsform 23, aufweisend eine Schmelze-Massefließrate bestimmt nach DIN EN ISO 1133 (Stand März 2012) gemessen bei einer Temperatur von 190°C und 21,6 kg im Bereich von 20 bis 350 g/10min, bevorzugt im Bereich von 35 bis 90 g/10min, weiter bevorzugt im Bereich von 40 bis 85 g/10min.

25. Polyurethan, insbesondere thermoplastisches Polyurethan, gemäß einer der Ausführungsformen 1 bis 22, erhältlich oder erhalten durch Umsetzung von mindestens den Komponenten (i) bis (iii):

(i) eine Diisocyanatzusammensetzung, welche mindestens HDI umfasst;

(ii) eine Polyolzusammensetzung, umfassend

(ii.1) mindestens ein Polyetherdiol, welches ein zahlenmittleres Molekulargewicht $M_n$ im Bereich von 500 bis 3000 g/mol aufweist,
(ii.2) mindestens ein Polysiloxan der allgemeinen Formel Ia

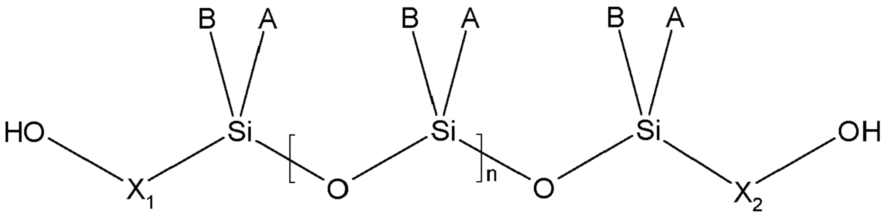

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,6-Hexandiol umfasst.

26. Polyurethan, insbesondere thermoplastisches Polyurethan, gemäß Ausführungsform 25, aufweisend eine Schmelze-Massefließrate bestimmt nach DIN EN ISO 1133 (Stand März 2012) gemessen bei einer Temperatur von 190°C und 3,8 kg im Bereich von 20 bis 350 g/10min, bevorzugt im Bereich von 28 bis 220 g/10min, weiter bevorzugt im Bereich von 28 bis 215 g/10min.

27. Polyurethan, insbesondere thermoplastisches Polyurethan, gemäß einer der Ausführungsformen 1 bis 22, erhältlich oder erhalten durch Umsetzung von mindestens den Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyesterdiol, welches ein zahlenmittleres Molekulargewicht $M_n$ im Bereich von 500 bis 3000 g/mol aufweist,
(ii.2) mindestens ein Polysiloxan der allgemeinen Formel Ia

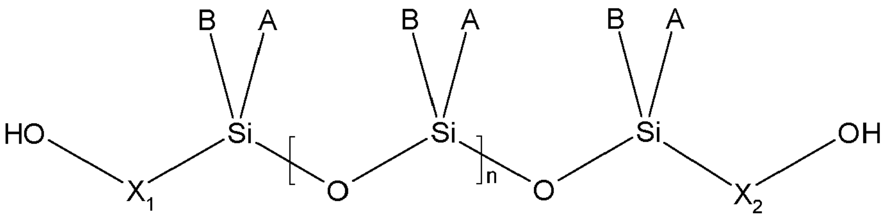

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

28. Polyurethan, insbesondere thermoplastisches Polyurethan, gemäß Ausführungsform 27, aufweisend eine Schmelze-Massefließrate bestimmt nach DIN EN ISO 1133 (Stand März 2012) gemessen bei einer Temperatur von 220°C und 2,16 kg im Bereich von 20 bis 350 g/10min, bevorzugt im Bereich von 60 bis 120 g/10min, weiter bevorzugt im Bereich von 65 bis 105 g/10min.

29. Polyurethan, insbesondere thermoplastisches Polyurethan, gemäß einer der Ausführungsformen 1 bis 22, erhältlich oder erhalten durch Umsetzung von mindestens den Komponenten (i) bis (iii):

(i) eine Diisocyanatzusammensetzung, welche mindestens 4,4'-MDI umfasst;

(ii) eine Polyolzusammensetzung, umfassend

(ii.1) mindestens ein Polyetherdiol, bevorzugt PTHF, welches ein zahlenmittleres Molekulargewicht $M_n$ im Bereich von 500 bis 3000 g/mol aufweist,

(ii.2) mindestens ein Polysiloxan der allgemeinen Formel Ia

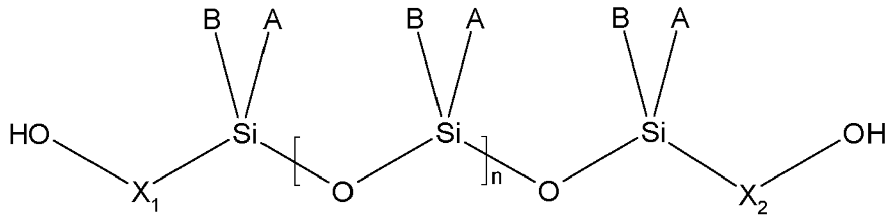

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;;

(iii) eine Kettenverlängererzusammensetzung, welche mindestens 1,2-Ethandiol oder 2,4-Diamino-3,5-di(methylthio)toluol, bevorzugt 2,4-Diamino-3,5-di(methylthio)toluol, umfasst.

30. Polyurethan, insbesondere thermoplastisches Polyurethan, gemäß Ausführungsform 29, aufweisend eine Schmelze-Massefließrate bestimmt nach DIN EN ISO 1133 (Stand März 2012) gemessen bei einer Temperatur von 190°C und 10 kg im Bereich von 20 bis 350 g/10min, bevorzugt im Bereich von 75 bis 350 g/10min, weiter bevorzugt im Bereich von 85 bis 340 g/10min.

31. Polyurethan, insbesondere thermoplastisches Polyurethan, gemäß einer der Ausführungsformen 1 bis 30 erhältlich oder erhalten durch Umsetzung von mindestens den Komponenten (i) bis (iii) und zusätzlich
(iv) einer Antioxidantzusammensetzung, wobei die Antioxidantzusammensetzung mindestens ein Antioxidant ausgewählt aus den sterisch gehinderten Phenole, bevorzugt ausgewählt aus den sterisch gehinderten Phenolen, welche mindestens in ortho-Position benachbart zur OH-Gruppe eine tert-Butylgruppe aufweisen, weiter bevorzugt ausgewählt aus der Gruppe bestehend aus Ethylenbis(oxyethylen)bis-(3-(5-tert-butyl-4-hydroxy-m-tolyl)-propionat) (Irganox 245 FF, CAS-Nummer 36443-68-2), Octadecyl-3-(3,5-di-tert-butyl-4-hydroxyphenyl)-propionat (Irganox 1076, CAS-Nummer 2082-79-3), Octyl-3,5-di-tert-butyl-4-hydroxy-hydrocinnamat (Irganox 1135, CAS-Nummer 125643-61-0), N,N'-Hexan-1,6-diylbis[3-(3,5-di-tert-butyl-4-hydroxy-phenylpropionamid] (Irganox 1098, CAS-Nummer 23128-74-7), Pentaerythritol tetrakis(3-(3,5-di-tert-butyl-4-hydroxyphenyl)propionat) (Irganox 1010, CAS-Nummer 6683-19-8) und 3,5-Bis(tert-butyl)-4-hydroxytoluol (BHT, CAS-Nummer 128-37-0), weiter bevorzugt ausgewählt aus der Gruppe bestehend aus Pentaerythritol tetrakis(3-(3,5-di-tert-butyl-4-hydroxyphenyl)propionat), N,N'-Hexan-1,6-diylbis[3-(3,5-di-tert-butyl-4-hydroxyphenylpropionamid] und einer Mischung aus Pentaerythritol tetrakis(3-(3,5-di-tert-butyl-4-hydroxyphenyl)propionat) und N,N'-Hexan-1,6-diylbis[3-(3,5-di-tert-butyl-4-hydroxyphenylpropionamid], enthält.

32. Verfahren zur Herstellung eines Polyurethans, insbesondere eines thermoplastischen Polyurethans, umfassend die Umsetzung der Komponenten (i) bis (ii):

(i) eine Polyisocyanatzusammensetzung;

(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,

(ii.2) mindestens ein Polysiloxan aufweisen zwei endständige gegenüber Isocyanaten reaktive Funktionalitäten ausgewählt aus der Gruppe bestehend aus Thiogruppe, Hydroxylgruppe und Aminogruppe.

33. Verfahren zur Herstellung eines Polyurethans, insbesondere eines thermoplastischen Polyurethans, umfassend die Umsetzung der Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan aufweisen zwei endständige gegenüber Isocyanaten reaktive Funktionalitäten ausgewählt aus der Gruppe bestehend aus Thiogruppe, Hydroxylgruppe und Aminogruppe;

(iii) eine Kettenverlängererzusammensetzung.

34. Verfahren zur Herstellung eines Polyurethans, insbesondere eines thermoplastischen Polyurethans, gemäß Ausführungsform 32 oder 33, umfassend die Umsetzung der Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan der allgemeinen Formel I

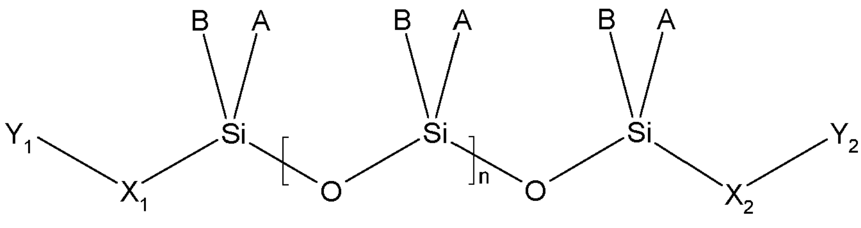
(I),

wobei n eine ganze Zahl im Bereich von 1 bis 250 ist, A und B unabhängig voneinander ausgewählt sind aus der Gruppe der C1-C20-Alkylgruppen; $X_1$ ausgewählt ist aus der Gruppe bestehend aus $(CH_2\text{-}CH_2\text{-}O\text{-})_m$-Gruppe, $(CH_2\text{-}CH_2\text{-}CH_2\text{-}O)_m$-Gruppe, $(CH_2\text{-}CHCH_3\text{-}O)_m$-Gruppe, $(CH_2)_m$-O-Gruppe und $(CH_2)_m$-Gruppe, $X_2$ ausgewählt ist aus der Gruppe bestehend aus $(O\text{-}CH_2\text{-}CH_2)_m$-Gruppe, $(O\text{-}CHCH_3\text{-}CH_2)_m$-Gruppe, $(O\text{-}CH_2\text{-}CH_2\text{-}CH_2)_m$-Gruppe, $\text{-}O\text{-}(CH_2)_m$-Gruppe und $\text{-}(CH_2)_m$-Gruppe, wobei m für $X_1$, $X_2$ jeweils unabhängig eine ganze Zahl im Bereich von 1 bis 100 ist; und $Y_1$, $Y_2$ unabhängig voneinander ausgewählt sind aus der Gruppe bestehend aus Thiogruppe, Hydroxylgruppe und Aminogruppe;

(iii) eine Kettenverlängererzusammensetzung.

35. Verfahren zur Herstellung eines Polyurethans, insbesondere eines thermoplastischen Polyurethans, gemäß einer der Ausführungsform 32 bis 34, umfassend die Umsetzung der Komponenten (i) bis (ii):

(i) eine Diisocyanatzusammensetzung;
(ii) eine Polyolzusammensetzung, umfassend

(ii.1) mindestens ein zweiwertiges Polyester- oder Polyetherdiol mit einem zahlenmittleren Molekulargewicht im Bereich von 500 bis 3000 g/mol,
(ii.2) mindestens ein Polysiloxan der allgemeinen Formel I

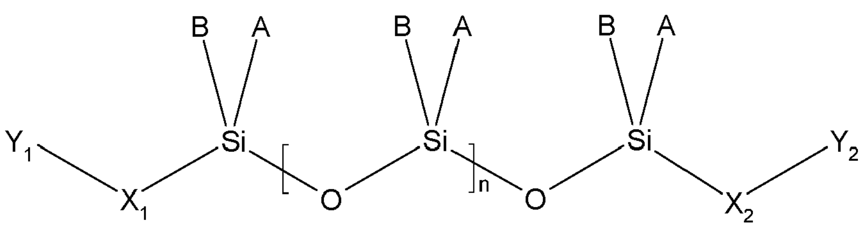
(I),

wobei n eine ganze Zahl im Bereich von 1 bis 250 ist, A und B unabhängig voneinander ausgewählt sind aus der Gruppe der C1-C20-Alkylgruppen; $X_1$ ausgewählt ist aus der Gruppe bestehend aus $(CH_2\text{-}CH_2\text{-}O\text{-})_m$-Gruppe, $(CH_2\text{-}CH_2\text{-}CH_2\text{-}O)_m$-Gruppe, $(CH_2\text{-}CHCH_3\text{-}O)_m$-Gruppe, $(CH_2)_m$-O-Gruppe und $(CH_2)_m$-Gruppe, $X_2$ ausgewählt ist aus der Gruppe bestehend aus $(O\text{-}CH_2\text{-}CH_2)_m$-Gruppe, $(O\text{-}CHCH_3\text{-}CH_2)_m$-Gruppe, $(O\text{-}CH_2\text{-}CH_2\text{-}CH_2)_m$-Gruppe, $\text{-}O\text{-}(CH_2)_m$-Gruppe und - $(CH_2)_m$-Gruppe, wobei m für $X_1$, $X_2$ jeweils unabhängig eine ganze Zahl im Bereich von 1 bis 100 ist; und $Y_1$, $Y_2$ unabhängig voneinander ausgewählt sind aus der Gruppe bestehend aus Thiogruppe, Hydroxylgruppe und Aminogruppe;

(iii) eine Kettenverlängererzusammensetzung.

36. Verfahren zur Herstellung eines Polyurethans, insbesondere eines thermoplastischen Polyurethans, gemäß einer der Ausführungsformen 32 bis 34, umfassend die Umsetzung der Komponenten (i) bis (iii):

(i) eine Diisocyanatzusammensetzung, welche mindestens 4,4'-MDI oder HDI umfasst;
(ii) eine Polyolzusammensetzung, umfassend

(ii.1) mindestens ein Polyetherdiol, bevorzugt PTHF, oder ein Polyesterdiol, wobei das Polyether- oder Polyesterdiol ein zahlenmittlerens Molekulargewicht im Bereich von 500 bis 3000 g/mol aufweist,
(ii.2) mindestens ein Polysiloxan der allgemeinen Formel Ia

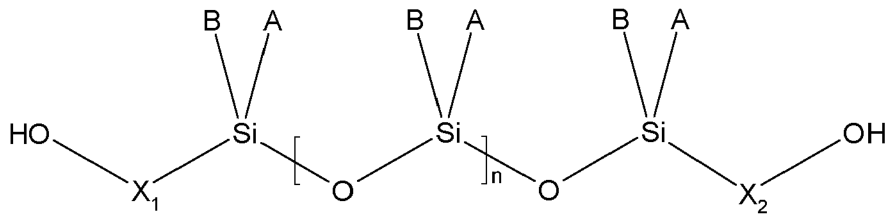
(Ia),

wobei n eine ganze Zahl im Bereich von 10 bis 20 ist, A und B beides Methylgruppen sind; X1 eine $(CH_2\text{-}CH_2\text{-}O\text{-})_m$-Gruppe ist, X2 eine (O-CH2-CH2)m-Gruppen ist, wobei m für X1, X2 jeweils unabhängig eine ganze Zahl im Bereich von 3 bis 15 ist;

(iii) eine Kettenverlängererzusammensetzung, welche mindestens ein Diol oder Diamin ausgewählt aus der Gruppe bestehend aus 1,4-Butandiol, *1,6*-Hexandiol, 1,2-Ethandiol und 2,4-Diamino-3,5-di(methylthio)toluol, umfasst.

37. Verfahren zur Herstellung eines Polyurethans, insbesondere eines thermoplastischen Polyurethans, gemäß einer der Ausführungsformen 32 bis 34, umfassend die Umsetzung der Komponenten (i) bis (iii):

(i) eine Diisocyanatzusammensetzung, welche mindestens MDI umfasst;
(ii) eine Polyolzusammensetzung, umfassend

(ii.1) mindestens ein Polyetherdiol, bevorzugt PTHF, mit einem zahlenmittleren Molekulargewicht im Bereich von 500 bis 3000 g/mol,
(ii.2) mindestens ein Polysiloxan der allgemeinen Formel Ia

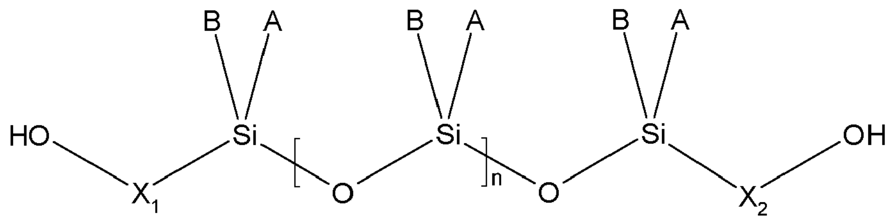
(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ gleich und eine ganze

Zahl im Bereich von 3 bis 15 ist;

(iii) eine Kettenverlängererzusammensetzung, welche mindestens 1,4-Butandiol umfasst.

38. Verfahren zur Herstellung eines Polyurethans, insbesondere eines thermoplastischen Polyurethans, gemäß einer der Ausführungsformen 32 bis 34, umfassend die Umsetzung der Komponenten (i) bis (ii):

(i) eine Diisocyanatzusammensetzung, welche mindestens HDI umfasst;
(ii) eine Polyolzusammensetzung, umfassend
(ii.1) mindestens ein Polyetherdiol, bevorzugt PTHF, mit einem zahlenmittleren Molekulargewicht im Bereich von 500 bis 3000 g/mol, (ii.2) mindestens ein Polysiloxan der allgemeinen Formel Ia

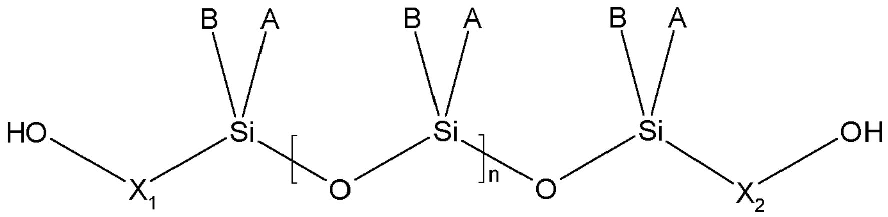

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;
(iii) eine Kettenverlängererzusammensetzung, welche mindestens1,6-Hexandiol umfasst.

39. Verfahren zur Herstellung eines Polyurethans, insbesondere eines thermoplastischen Polyurethans, gemäß einer der Ausführungsformen 32 bis 34, umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyesterdiol, welches ein zahlenmittleres Molekulargewicht $M_n$ im Bereich von 500 bis 3000 g/mol aufweist,
(ii.2) mindestens ein Polysiloxan der allgemeinen Formel Ia

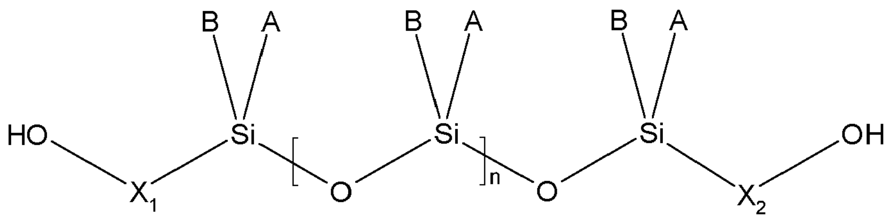

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,4-Butandiol umfasst.

40. Verfahren zur Herstellung eines Polyurethans, insbesondere eines thermoplastischen Polyurethans, gemäß einer der Ausführungsformen 32 bis 34, umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyetherdiol, bevorzugt PTHF, mit einem zahlenmittleren Molekulargewicht im Bereich

von 500 bis 3000 g/mol,
(ii.2) mindestens ein Polysiloxan der allgemeinen Formel Ia

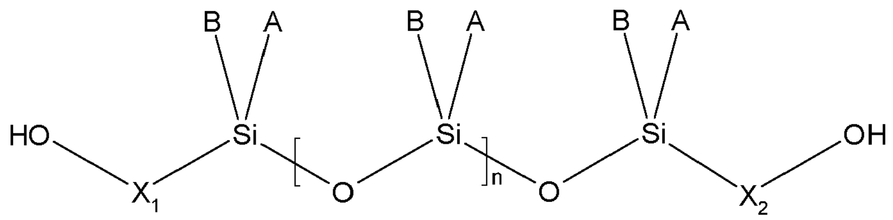

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ gleich und eine ganze Zahl im Bereich von 3 bis 15 ist;

(iii) eine Kettenverlängererzusammensetzung, welche mindestens 1,2-Ethandiol oder 2,4-Diamino-3,5-di(methylthio)toluol, bevorzugt 2,4-Diamino-3,5-di(methylthio)toluol, umfasst.

41. Verfahren zur Herstellung eines Polyurethans, insbesondere eines thermoplastischen Polyurethans, gemäß einer der Ausführungsformen 32 bis 40, umfassend die Umsetzung der Komponenten (i) bis (iii) und zusätzlich (iv) einer Antioxidantzusammensetzung, wobei die Antioxidantzusammensetzung mindestens ein Antioxidant ausgewählt aus den sterisch gehinderten Phenole, bevorzugt ausgewählt aus den sterisch gehinderten Phenolen, welche mindestens in ortho-Position benachbart zur OH-Gruppe eine tert-Butylgruppe aufweisen, weiter bevorzugt ausgewählt aus der Gruppe bestehend aus Ethylenbis(oxyethylen)bis-(3-(5-tert-butyl-4-hydroxy-m-tolyl)-propionat) (Irganox 245 FF, CAS-Nummer 36443-68-2), Octadecyl-3-(3,5-di-tert-butyl-4-hydroxyphenyl)-propionat (Irganox 1076, CAS-Nummer 2082-79-3), Octyl-3,5-di-tert-butyl-4-hydroxy-hydrocinnamat (Irganox 1135, CAS-Nummer 125643-61-0), N,N'-Hexan-1,6-diylbis[3-(3,5-di-tert-butyl-4-hydroxy-phenylpropionamid] (Irganox 1098, CAS-Nummer 23128-74-7), Pentaerythritol tetrakis(3-(3,5-di-tert-butyl-4-hydroxyphenyl)propionat) (Irganox 1010, CAS-Nummer 6683-19-8) und 3,5-Bis(tert-butyl)-4-hydroxytoluol (BHT, CAS-Nummer 128-37-0), weiter bevorzugt ausgewählt aus der Gruppe bestehend aus Pentaerythritol tetrakis(3-(3,5-di-tert-butyl-4-hydroxyphenyl)propionat), N,N'-Hexan-1,6-diylbis[3-(3,5-di-tert-butyl-4-hydroxyphenylpropionamid] und einer Mischung aus Pentaerythritol tetrakis(3-(3,5-di-tert-butyl-4-hydroxyphenyl)propionat) und N,N'-Hexan-1,6-diylbis[3-(3,5-di-tert-butyl-4-hydroxyphenylpropionamid], enthält.

42. Verwendung eines Polyurethans, insbesondere eines thermoplastischen Polyurethans, gemäß einer der Ausführungsformen 1 bis 31 oder eines Polyurethans, insbesondere eines thermoplastischen Polyurethans, erhältlich oder erhalten nach einem Verfahren gemäß einer der Ausführungsformen 32 bis 41 zur Herstellung eines Formkörpers, eines Spritzgussprodukts, eines Extrusionsprodukts, oder einer Folie.

43. Verwendung eines Polyurethans, insbesondere eines thermoplastischen Polyurethans, gemäß einer der Ausführungsformen 1 bis 31 oder eines Polyurethans, insbesondere eines thermoplastischen Polyurethans, erhältlich oder erhalten nach einem Verfahren gemäß einer der Ausführungsformen 32 bis 41 für einen Artikel ausgewählt ist aus der Gruppe bestehend aus Konsumentenartikel, bevorzugt ausgewählt aus der Gruppe bestehend aus Bekleidungsartikel, insbesondere Schuh und Schuhbestandteil, insbesondere Mittelsohle, Außensohle und Schnürsenkel; Schmuck und Schmuckbestandteil, insbesondere für ein Smartdevice oder für Überwachungselektronik, bevorzugt ausgewählt aus der Gruppe bestehend aus Armband, Armbandbestandteil, Umhängeband und Umhängebandbestandteil, Körpergurt und Körpergurtbestandteil, Brille und Brillenbestandteil; Sportzubehörartikel, insbesondere Sportband, Dehnungsband; Dämpfungsmaterial; Schaumstoffpartikel; gewebter Artikel; nicht-gewebter Artikel; Reinigungsartikeln für mobile Fahr- oder Fluggeräte, insbesondere Scheibenwischer; medizinischer Artikel, insbesondere Verbandsartikel, Schlauch, transdermales System, Bestandteil eines transdermalen Systems, insbesondere Pflaster, Bestandteil eines Pflasters; Möbelteil; Kissen, Kisssenbestandteil; Matratze, Matratzenbestandteil; Automobilzubehörteil, insbesondere Automobilkabelummantelung oder -schlauch; Folie, insbesondere Fußbodenfolie, Skifolie, Schutzfolie; Schutzhülle; Designelement für elektrische Bauteile.

44. Artikel, umfassend ein Polyurethan, insbesondere ein thermoplastisches Polyurethan, gemäß einer der Ausführungsformen 1 bis 31 oder ein Polyurethans, insbesondere eines thermoplastischen Polyurethans, erhältlich oder erhalten nach einem Verfahren gemäß einer der Ausführungsformen 32 bis 41.

45. Schaumstoffpartikel auf Basis von Polyurethan, erhalten oder erhältlich aus einem Polyurethan, insbesondere einem thermoplastischen Polyurethan, gemäß einer der Ausführungsformen 1 bis 31.

46. Schaumstoffpartikel nach Ausführungsform 45, wobei das Polyurethan, insbesondere das thermoplastische Polyurethan, eine Härte im Bereich von Shore 30A bis 98A oder im Bereich von Shore 40D bis 64D, bevorzugt im Bereich von Shore 30A bis 95A, weiter bevorzugt im Bereich von Shore 70A bis 95A aufweist.

47. Verfahren zur Herstellung von Schaumstoffpartikeln gemäß Ausführungsform 45 oder 46, dadurch gegenzeichnet, dass ein Polyurethan, insbesondere ein thermoplastisches Polyurethan, gemäß einer der Ausführungsformen 1 bis 31, aufgeschmolzen, mit einem Treibmittel versetzt und die treibmittelhaltige Schmelze unter Aufschäumen granuliert wird, bevorzugt bei einem Druck im Bereich von 1 bis 15 bar, weiter bevorzugt bei einem Druck im Bereich von 5 bis 15 bar.

48. Verfahren zur Herstellung von Schaumstoffpartikeln gemäß Ausführungsform 45 oder 46, dadurch gegenzeichnet, dass ein Polyurethan, insbesondere ein thermoplastisches Polyurethan, gemäß einem der Ansprüche 1 bis 31 bei einem Druck im Bereich von 1 bis 15 bar, bevorzugt im Bereich von 1 bis 5 bar, in Gegenwart eines Treibmittels expandiert wird.

49. Partikelschaumstoffe, erhältlich durch Verschweißen von Schaumstoffpartikeln nach Ausführungsform 45 oder 46 oder von Schaumstoffpartikeln erhalten oder erhältlich nach dem Verfahren nach Ausführungsform 47 oder 48 durch Wasserdampf oder Einstrahlung elektromagnetischer Strahlung, insbesondere im Radiofrequenzbereich (9 kHZ bis 1 THz).

50. Partikelschaumstoffe, erhältlich durch Verkleben von Schaumstoffpartikeln nach Ausführungsform 45 oder 46 oder von Schaumstoffpartikeln erhalten oder erhältlich nach dem Verfahren nach Ausführungsform 47 oder 48 mit Klebstoffen.

51. Verwendung eines Schaumstoffpartikels gemäß Ausführungsform 45 oder 46 oder eines Schaumstoffpartikels, erhalten oder erhältlich nach dem Verfahren gemäß Ausführungsform 47 oder 48 oder eines Partikelschaumstoffs gemäß Ausführungsform 49 oder 50 für Anwendungen aus den Bereichen Sport, Bekleidung, Bau, Automobil, Elektronik.

52. Verwendung eines Schaumstoffpartikels gemäß Ausführungsform 45 oder 46 oder eines Schaumstoffpartikels, erhalten oder erhältlich nach dem Verfahren gemäß Ausführungsform 47 oder 48 oder eines Partikelschaumstoffs gemäß Ausführungsform 49 oder 50 für einen Konsumentenartikel, bevorzugt ausgewählt aus der Gruppe bestehend aus Bekleidungsartikel, insbesondere Schuh und Schuhbestandteil, insbesondere Mittelsohle und Außensohle; Schmuck und Schmuckbestandteil, insbesondere für ein Smartdevice oder Überwachungselektronik (insbesondere zur Überwachung von Körperfunktionen wie Herzschlag, Temperatur), bevorzugt ausgewählt aus der Gruppe bestehend aus Armband, Armbandbestandteil, Umhängeband und Umhängebandbestandteil, Körpergurt und Körpergurtbestandteil, Brille und Brillenbestandteil; Sportzubehörartikel, insbesondere Sportband, Dehnungsband; Dämpfungsmaterial; ; Reinigungsartikeln für mobile Fahr- oder Fluggeräte, insbesondere Scheibenwischer; medizinischer Artikel.

53. Partikelschaum aus Polyurethan, erhalten oder erhältlich aus einem Polyurethan, insbesondere einem thermoplastischen Polyurethan, gemäß einer der Ausführungsformen 1 bis 31.

54. Partikelschaum gemäß Ausführungsform 53, wobei der mittlere Durchmesser des Partikelschaums zwischen 0,2 bis 20 mm liegt.

55. Partikelschaum gemäß Ausführungsform 53 oder 54, wobei der mittlere Durchmesser des Partikelschaums zwischen 0,5 bis 15 mm liegt.

56. Partikelschaum gemäß einer der Ausführungsformen 53 bis 55, wobei der mittlere Durchmesser der Partikelschäume zwischen 1 bis 12 mm liegt.

57. Verfahren zur Herstellung eines Partikelschaums nach einer der Ausführungsformen 53 bis 56 umfassend

i. Bereitstellen des Polyurethans, insbesondere des thermoplastischen Polyurethans, gemäß einer der Ausführungsformen 1 bis 31;

ii. Imprägnierung des Polyurethans, insbesondere des thermoplastischen Polyurethans, gemäß einer der Ausführungsformen 1 bis 31, mit einem Treibmittel unter Druck;

iii. Expandieren des Polyurethans, insbesondere des thermoplastischen Polyurethans, gemäß einer der Ausführungsformen 1 bis 31, mittels Druckabfall.

58. Verfahren zur Herstellung eines Formkörpers umfassend

(x) Einbringen der Partikelschäume gemäß einer der Ausführungsformen 53 bis 56 in eine entsprechende Form,

(y) Fusionierung der Partikelschäume aus Schritt (x).

59. Verfahren nach Ausführungsform 58, dadurch gekennzeichnet, dass die Fusionierung in Schritt (y) in einer geschlossenen Form erfolgt.

60. Verfahren nach Ausführungsform 58 oder 59, dadurch gekennzeichnet, dass die Fusionierung in Schritt (y) mittels Wasserdampf, Heißluft oder energetische Strahlung erfolgt.

61. Formkörper erhalten oder erhältlich nach dem Verfahren gemäß einer der Ausführungsformen 58 bis 60, dadurch gekennzeichnet, dass die Dichte des Formkörpers zwischen 75 bis 375 kg/$m^3$ liegt.

62. Formkörper gemäß Ausführungsform 61, wobei der Formkörper eine Schuhzwischensohle, Schuheinlegesohle, Schuhkombisohle, Fahrradsattel, Fahrradreifen, Dämpfungselement, Polsterung, Matratze, Unterlage, Griff, Schutzfolie, ein Bauteilen im Automobilinnen- und - außenbereich, Ball, oder Bodenbelag, insbesondere für Sportflächen, Leichtathletiklauf-bahnen, Sporthallen, Kinderspielplätze und Gehwegen ist

63. Verwendung eines Partikelschaums nach einer der Ausführungsformen 53 bis 56 für die Herstellung eines Formkörpers nach Ausführungsform 61 oder 62.

**Angeführte Literatur**

"Kunststoffhandbuch, Band 7, Polyurethane" Carl Hanser Verlag, 3. Auflage, 1993, Kapitel 3.1, 3.2 und 3.3.2, S. 103-113
EP 0 922 552 A1
WO 2006/082183 A1
WO 2005/023920 A1
WO 2007/082838 A1
WO 2013/153190 A1
WO 2014/198779 A1
WO 2010/076224 A1
US 9097835 B2
WO 94/20568 A1
WO 2007/082838 A1
WO2017/030835 A1
WO 2013/153190 A1
WO 2010/010010 A1
Saechtling (Hg.), Kunststoff-Taschenbuch, 27. Auflage, Hanser-Verlag München 1998, Kap. 3.2.1 und 3.2.4
WO 2014/150122 A1
WO 2014/150124 A1
EP 1 979 401 B1
US 2015/0337102 A
EP 2 872 309 B1
EP 3 053 732 A
WO 2016/146537 A1
EP 17198591.4

Die nachfolgenden Beispiele dienen der Veranschaulichung der Erfindung, sind aber in keiner Weise einschränkend hinsichtlich des Gegenstands der vorliegenden Erfindung.

**BEISPIELE**

**1. Chemikalien**

| Bezeichnung | Chemische Bezeichnung |
|---|---|
| Isocyanat 1 | 4,4'-Diphenylmethandiisocyanat (4,4'-MDI) |
| Isocyanat 2 | Hexamethylen-1,6-diisocyanat (HDI) |
| Kettenverlängerer 1 | 1,4-Butandiol (BDO) |
| Kettenverlängerer 2 | 1,6-Hexandiol (1,6-HDO) |
| Kettenverlängerer 3 | 1,2-Ethandiol (MEG) |
| Kettenverlängerer 4 | Aromatisches Diamin (>95 Gew.% 2,4-Diamino-3,5-di(methylthio)toluol) |
| Antioxidant 1 | Pentaerythritoltetrakis[3-[3,5-di-tert-butyl-4-hydroxyphenyl]propionat |
| Antioxidant 2 | N,N'-1,6-Hexandiylbis[3,5-bis(1,1-dimethylethyl)-4-hydroxy-benzolpropanamid |
| Antioxdant 3 | Mischung aus Antioxidant 1 und Antioxidant 2 im Verhältnis von 1:1 |
| Antioxidant 3 | Mischung aus Antioxidant 1 und Antioxidant 2 |
| Polyol 1 | Polytetramethylenetherglykol (PTHF) mit einer OH-Zahl im Bereich von 109,5-115,1 mg KOH/g |
| Polyol 2 | Polyesterdiol mit einer Hydroxylzahl von 56 mg KOH/g aufgebaut aus Adipinsäure, 1,4-Butandiol und 1,6-Hexandiol; zahlenmittleres Molekulargewicht $M_n$: 2000 g/mol (ADS/BDO/HDO) |
| Hydrolysestabilisator | Polymer auf Basis von Carbodiimid und Polyglykolether |
| Weichmacher | Tributyl-O-acetyl citrat |
| Antiblockmittel | Ethylenbis-stearamid |
| Katalysator 1 | Zinn-Katalysator Kosmos® 29 der Firma Evonik |
| Si-Polyol 1 | difunktionelles Polyol mit 59% PDMS und 41% EO Anteil und mit einer OH-Zahl von 62 mg KOH/g |
| Si-Polyol 2 | difunktionelles Polyol mit 55% PDMS und 45% EO Anteil und mit einer OH-Zahl von 57 mg KOH/g |
| Si-Polyol 3 | difunktionelles Polyol mit 72% PDMS und 28% EO Anteil und mit einer OH-Zahl von 65 mg KOH/g |
| PDMS: Polydimethylsiloxan<br>EO: Ethylenoxid | |

**2. Meßmethoden**

| | |
|---|---|
| Zugfestigkeit: | DIN 53504 |
| Reißdehnung: | DIN 53504 |
| Reißfestigkeit: | DIN ISO 34-1 Bb |
| Weiterreißfestigkeit: | DIN ISO 34-1 Bb |
| Shore-Härte: | DIN ISO 7619-1 |
| Abriebsbestimmung: | DIN ISO 4649 |

(fortgesetzt)

| | |
|---|---|
| Heißluftbeständigkeit: | DIN 53508 |
| Schmelze-Massefließrate (MFR): | DIN EN ISO 1133 (Stand März 2012) |

Der Hartsegmentgehalt (Hartphasenanteil) wurde gemäß der Formel aus WO 2010/076224 A1 bzw. US 9097835 B2 bestimmt:

$$Hartphasenanteil = \{\sum_{x=1}^{k}[(m_{KVx} / M_{KVx})^{*} M_{Iso} + m_{KVx}]\} / m_{ges}$$

mit den folgenden Bedeutungen:

- $Mkv_x$: Molare Masse des Kettenverlängerers x in g/mol
- $mKV_x$: Masse des Kettenverlängerers x in g
- $M_{IS0}$: Molare Masse des verwendeten Isocyanates in g/mol
- $m_{ges}$: Gesamtmasse aller Ausgangsstoffe in g
- k: Anzahl der Kettenverlängerer.

### 3. Beispiel 1 - Herstellung eines Si-basierten thermoplastischen Polyurethans (TPU) mit aromatischem Isocyanat

In einer 2 Liter Weißblechdose wurden 660 g Polyol 1 und 440 g Si-Polyol 3 zusammen mit 72,28 g Kettenverlängerer 1 eingewogen und kurz mit Stickstoff beschleiert. Die Dose wurde mit einem geeigneten Deckel verschlossen und im Heizschrank auf ca. 90 °C aufgeheizt. Die flüssigen Komponenten in der Dose wurden auf einer Hebebühne mittels Propellerrührer gemischt. Anschließend wurden 8,1 g Antioxidant 1 und 8,1g Antioxidant 2 hinzugegeben und verrührt. Bei 80 °C erfolgte die Zugabe von 433,61 g Isocyanat 1. Die Gesamtrezeptur ist in Tabelle 1 wiedergegeben. Das Isocyanat 1 hatte eine Temperatur von 45 °C. Eine Durchmischung erfolgte mittels Propellerrüher bei 200u/min. Bei Erreichen von 110 °C wurde die Reaktionsmischung in eine Teflonschale gegossen. Die Teflonschale befand sich auf einem Heiztisch mit 125 °C. Nach 10 min wurde die feste Schwarte vom Heiztisch genommen und anschließend für 24h im Heizschrank bei 80 °C getempert. Die ausgekühlte Schwarte wurde in einer Schneidmühle zerkleinert. Das entstandene Granulat wurde für 3h bei 110 °C getrocknet. Mittels Spritzgussverfahren wurden 2mm und 6mm Prüfkörper hergestellt und entsprechend den Anforderungen der jeweiligen DIN-Norm verwendet.

### 4. Beispiele 2 bis 4 - Herstellung Si-basierter TPUs mit aromatischem Isocyanat

Weitere Si-basierte TPUs mit aromatischem Isocyanat wurden analog der Vorschrift von Beispiel 1 hergestellt, wobei die einzelnen Komponenten in den in Tabelle 1 angegebenen Mengen (Rezepturen) eingesetzt wurden.

Tabelle 1: Rezepturen für Beispiel 1 und die Beispiele 2 bis 4

| | Beispiel 1 | Beispiel 2 | Beispiel 3 | Beispiel 4 |
|---|---|---|---|---|
| Polyol 1 | 660,00 g | 950,00 g | 900,00 g | 880,00 g |
| Si Polyol 3 | 440,00 g | 50,00 g | 100,00 g | 220,00 g |
| Kettenverlängerer 1 | 72,28 g | 67,82 g | 67,52 g | 73,61 g |
| Isocyanat 1 | 433,61 g | 439,01 g | 432,60 g | 461,78 g |
| Antioxidant 1 | 8,11 g | 7,61 g | 7,58 g | 8,26 g |
| Antioxidant 2 | 8,11 g | 7,61 g | 7,58 g | 8,26 g |

### 5. Bestimmung der mechanischen Eigenschaften von Si-basiertenTPUs mit aromatischem Isocyanat

Für die Prüfkörper gemäß Beispiel 1 und den Beispielen 2, 3 und 4 wurden die Zugfestigkeit, die Reißdehnung und die Shore-Härte gemessen, sowie der Hartsegmentgehalt und der Abrieb bestimmt. Die nachfolgende Tabelle 2 gibt die Ergebnisse der Prüfungen wieder.

Tabelle 2: Ergebnisse der mechanischen Untersuchungen für die Si-basierten TPUs mit aromatischem Isocyanat gemäß Beispiel 1 und den Beispielen 2, 3 und 4

| | Si-polyol 3 | Hartsegmentgehalt | Zugfestigkeit | MFR (190°C/21,6 kg) [g/10min] |
|---|---|---|---|---|
| Beispiel 1 | 40 Gew.-% | 17 Gew.-% | Nicht spritzbar | Fließt durch |
| Beispiel 2 | 5 Gew.-% | 17 Gew.-% | >35MPa | 40 |
| Beispiel 3 | 10 Gew.-% | 17 Gew.-% | >35 MPa | 80,4 |
| Beispiel 4 | 20 Gew.-% | 17 Gew.-% | >15 MPa | Fließt durch |

Tabelle 2 - Fortsetzung

| | Reißdehnung | Reißfestigkeit | Shore-Härte (Shore A) | Abrieb |
|---|---|---|---|---|
| Beispiel 1 | Nicht spritzbar | Nicht spritzbar | Nicht spritzbar | Nicht spritzbar |
| Beispiel 2 | >500% | >40 kN/m | <75A | <15 $mm^3$ |
| Beispiel 3 | >500% | >40 kN/m | <75A | <15 $mm^3$ |
| Beispiel 4 | >500% | >35 kN/m | <75A | <15 $mm^3$ |

Es wurde überraschenderweise gefunden, dass bei einem Si-basiertem TPU mit einem Gehalt an Si-Polyol, insbesondere Si-Polyol 3, im Bereich von 5-30 Gew.-%, insbesondere von 5-20 Gew-%, die mechanischen Eigenschaften, insbesondere die Zugfestigkeit, Reißdehnung und Reißfestigkeit im Vergleich zu einem Si-basierten TPU mit einem Gehalt von 40 Gew.-% signifikant verbessert waren. Der Abrieb lag bei allen Beispielen unterhalb von 15 $mm^3$; dies ist eine überraschende Verbesserung gegenüber Standard-TPUs die kein Polysiloxan enthalten und auch eine Shore A Härte von 70 aufweisen.

**6. Beispiel 5 - Herstellung eines Si-basierten TPUs mit aliphatischem Isocyanat**

Ein Si-basiertes TPU mit einem Gehalt von 40 Gew-% an Si-Polyol 3 wurde gemäß der Vorschrift aus Beispiel 1 erzeugt, wobei die Mengen der eingesetzten Komponenten in Tabelle 3 wiedergegeben sind. Anstelle des aromatischen Isocyanats 1 aus Vergleichsbeispiel 1 wurde das aliphatische Isocyanat 2 verwendet. Die Herstellung von Prüfkörpern war nicht möglich, da sich das TPU nicht mittels Spritzgussverfahren verarbeiten ließ.

**7. Beispiele 6 bis 8 - Herstellung Si-basierter TPUs mit aliphatischem Isocyanat**

Si-basierte TPUs mit einem Gehalt an Si-Polyol 3 im Bereich von 5 bis 20 Gew-% wurde gemäß der Vorschrift aus Beispiel 1 erzeugt, wobei die Mengen der eingesetzten Komponenten in Tabelle 3 wiedergegeben sind. Anstelle des aromatischen Isocyanats 1 aus Beispiel 1 wurde das aliphatische Isocyanat 2 verwendet. Gemäß der Vorschrift aus Vergleichsbeispiel 1 wurden mittels Spritzgussverfahren 2mm und 6mm Prüfkörper hergestellt.

Tabelle 3: Rezepturen für Beispiel 5 und die Beispiele 6 bis 8

| | Beispiel 5 | Beispiel 6 | Beispiel 7 | Beispiel 8 |
|---|---|---|---|---|
| Polyol 1 | 600,00 g | 950,00 g | 900,00 g | 800,00 g |
| Si Polyol 3 | 400,00 g | 50,00 g | 100,00 g | 200,00 g |
| Kettenverlängerer 2 | 96,51 g | 98,76 g | 98,45 g | 97,81 g |
| Isocyanat 2 | 279,21 g | 309,04 g | 304,85 g | 296,47 g |
| Katalysator 1 in 50% Dioctyladipat(DOA) | 688 µl | 704 µl | 702 µl | 697 µl |
| Antioxidant 1 | 6,95 g | 7,12 g | 7,58 g | 8,26 g |
| Antioxidant 2 | 6,95 g | 7,12 g | 7,58 g | 8,26 g |

### 8. Bestimmung der mechanischen Eigenschaften von Si-basiertenTPUs mit aliphatischem Isocyanat

Für die Prüfkörper gemäß Beispiel 5 und den Beispielen 6 bis 8 wurden Zugfestigkeit, Reißdehnung, Reißfestigkeit und Shore-Härte gemessen und der Hartsegmentgehalt bestimmt. Die nachfolgende Tabelle 4 gibt die Ergebnisse der Prüfungen wieder.

Tabelle 4: Ergebnisse der mechanischen Untersuchungen für die Si-basierten TPUs mit aliphatischem Isocyanat des Beispiels 5 und der Beispiele 6 bis 8.

| | Si-polyol 3 [Gew.-%] | Hartsegmentgehalt [Gew.-%] | Zugfestigkeit | MFR (190°C/3,8 kg) [g/10min] |
|---|---|---|---|---|
| Beispiel 5 | 40 | 17 (Not injection moldable) | n.m. | 214,7 |
| Beispiel 6 | 5 | 17 | >20MPa | 28,8 |
| Beispiel 7 | 10 | 17 | >20 MPa | 54,07 |
| Beispiel 8 | 20 | 17 | >15 MPa | 116,98 |
| n.m.: nicht meßbar | | | | |

Tabelle 4 - Fortsetzung

| | Reißdehnung | Reißfestigkeit | Shore-Härte (Shore A) |
|---|---|---|---|
| Beispiel 5 | n.m. | n.m. | n.m. |
| Beispiel 6 | >500% | >30 kN/m | < 90A |
| Beispiel 7 | >500% | >30 kN/m | < 90A |
| Beispiel 8 | >500% | >30 kN/m | < 90A |

Die Si-basierten TPUs mit aliphatischem Isocyanat wiesen bei einem Si-Polyol-Gehalt im Bereich von 1 bis 30 Gewichts-%, bevorzugt im Bereich von 5 bis 20 Gewichts-%, eine verbesserte Zugfestigkeit von in jedem Fall > 15 MPa und eine Reißfestigkeit von >30 kN/m auf.

### 9. Vergleichsbeispiel 1 - Herstellung eines TPUs mit aromatischem Isocyanat ohne Si-Polyol

Ein TPU ohne Si-Polyol wurde gemäß der Vorschrift aus Beispiel 1 erzeugt, wobei die Mengen der eingesetzten Komponenten in Tabelle 5 wiedergegeben sind. Gemäß der Vorschrift aus Beispiel 1 wurden mittels Spritzgussverfahren 2mm und 6mm Prüfkörper hergestellt.

### 10. Beispiele 9 und 10 - Herstellung Si-basierter TPUs mit aromatischem Isocyanat und verschiedenen Si-Polyolen

Si-basierte TPUs mit einem Gehalt an Si-Polyol 2 (Beispiel 7, 10 Gew.-%) oder Si-Polyol 1 (Beispiel 8, 20 Gew.-%) im Bereich von 10 bis 20 Gew-% wurde gemäß der Vorschrift aus Vergleichsbeispiel 1 erzeugt, wobei die Mengen der eingesetzten Komponenten in Tabelle 5 wiedergegeben sind. Gemäß der Vorschrift aus Beispiel 1 wurden mittels Spritzgussverfahren 2mm und 6mm Prüfkörper hergestellt.

Tabelle 5: Rezepturen für Vergleichsbeispiel 1 und die Beispiele 9 und 10

| | Vergleichsbeispiel 1 | Beispiel 9 | Beispiel 10 |
|---|---|---|---|
| Polyol 2 | 1000,00 g | 720,00 g | 640,00 g |
| Si-Polyol | -- | 2 | 1 |
| Menge an Si-Polyol | 0,00 g | 80,00 g | 160,00 g |
| Kettenverlängerer 1 | 164,3 g | 164,28 g | 164,62 g |
| Isocyanat 1 | 560,00 g | 560,0 g | 560,0 g |

(fortgesetzt)

| | Vergleichsbeispiel 1 | Beispiel 9 | Beispiel 10 |
|---|---|---|---|
| Hydrolysestabilisator | 6,40 g | 6,4 g | 6,4 g |

**11. Bestimmung der thermischen Beständigkeit von Si-basiertenTPUs mit aromatischem Isocyanat (Langzeittest)**

Die Prüfkörper gemäß Vergleichsbeispiel 1 und den Beispielen 9 und ^0 wurden Langzeit-Heißluft-Alterungstests unterzogen und auf ihre Heißluftbeständigkeit untersucht. Hierfür wurden alle Prüfkörper für 3000 Stunden bei 165 °C in Luft gelagert, zuvor und anschließend wurde die Reißdehnung bestimmt. Die Ergebnisse sind in Tabelle 6 wiedergegeben.

Tabelle 6: Reißdehnungswerte des Vergleichsbeispiels 1 und der Beispiele 9 und 10 jeweils vor und nach thermischer Alterung (Langzeittest)

| | Shore-Härte (Shore A) vor thermischer Alterung | Reißdehnung vor thermischer Alterung | Reißdehnung nach thermischer Alterung | MFR (220°C/2,16 kg) [g/10min] |
|---|---|---|---|---|
| Vergleichsbeispiel 1 | 95A | >500% | Prüfkörper geschmolzen | 7,13 |
| Beispiel 9 | 95A | >500% | >300% | 65,7 |
| Beispiel 10 | 95A | >500% | >300% | 103,5 |

Es konnte beobachtet werden, dass die thermische Alterung für den Prüfkörper gemäß Vergleichsbeispiel 1 zu einer Verformung führte und dass nach 2000 Stunden Lagerung bei 165 °C die Reißdehnung unterhalb von 50% gefallen war. Im Gegensatz hierzu zeigten die Prüfkörper gemäß den Beispielen 9 und 10, welche beide Si-Polyol in 10 bis 20 Gew-% enthielten, nach der thermischen Alterung eine Reißdehnung größer 50% im Vergleich zur Reißdehnung vor thermischer Alterung. Die Einbringung eines Si-Polyols führt somit erwiesenermaßen zu einer Verbesserung in den Alterungseigenschaften.

**12. Vergleichsbeispiel 2 - Herstellung eines TPUs mit aromatischem Isocyanat ohne Si-Polyol**

Ein TPU ohne Si-Polyol wurde gemäß der Vorschrift aus Beispiel 1 erzeugt, wobei die Mengen der eingesetzten Komponenten in Tabelle 7 wiedergegeben sind. Gemäß der Vorschrift aus Vergleichsbeispiel 1 wurden mittels Spritzgussverfahren 2mm und 6mm Prüfkörper hergestellt.

**13. Beispiele 11 und 12 - Herstellung Si-basierter TPUs mit aromatischem Isocyanat und verschiedenen Si-Polyolen, sowie verschiedenen Kettenverlängern**

Si-basierte TPUs mit einem Gehalt an Si-Polyol 2 von 10 Gew.-% (Beispiel 11) oder 20 Gew.-% (Beispiel 12) wurde gemäß der Vorschrift aus Vergleichsbeispiel 1 erzeugt, wobei die Mengen der eingesetzten Komponenten in Tabelle 7 wiedergegeben sind. Gemäß der Vorschrift aus Beispiel 1 wurden mittels Spritzgussverfahren 2mm und 6mm Prüfkörper hergestellt.

Tabelle 7: Rezepturen für Vergleichsbeispiel 2 und die Beispiele 11 und 12

| | Vergleichsbeispiel 2 | Beispiel 11 | Beispiel 12 |
|---|---|---|---|
| Polyol 1 | 900,00 g | 765,00 g | 680,00 g |
| Si Polyol 2 | 0,00 g | 85,00 g | 170,00 g |
| Kettenverlängerer 3 (Diol) | 33,26 g | 0 | 0 |
| Kettenverlängerer 4 (Diamin) | 0,0 g | 118,62 g | 128,72 g |
| Weichmacher | 335,5 g | 343,68 | 346,31 g |

(fortgesetzt)

| | Vergleichsbeispiel 2 | Beispiel 11 | Beispiel 12 |
|---|---|---|---|
| Isocyanat 1 | 372,15 g | 351,48 g | 351,48 g |
| Antiblockmittel | 9,73 g | 9,97 g | 10,04 g |
| Antioxidant 1 | 8,11 g | 8,6 g | 8,66 g |
| Antioxidant 2 | 8,11 g | 8,6 g | 8,66 g |

**14. Bestimmung der thermischen Beständigkeit von Si-basiertenTPUs mit aromatischem Isocyanat (Kurzzeittest)**

Die Prüfkörper gemäß Vergleichsbeispiel 2 und den Beispielen 11 und 12 wurden Kurzzeit-Heißluft-Alterungstests unterzogen und auf ihre Heißluftbeständigkeit untersucht. Hierfür wurden alle Prüfkörper für 6 Stunden bei 200 °C in Luft gelagert, zuvor und anschließend wurde die Reißdehnung bestimmt. Die Ergebnisse sind in Tabelle 8 wiedergegeben.

Tabelle 8: Reißdehnungswerte des Vergleichsbeispiels 2 und der Beispiele 11 und 12 jeweils vor und nach thermischer Alterung (Kurzzeittest)

| | Shore-Härte (Shore A) vor thermischer Alterung | Reißdehnung vor thermischer Alterung | Reißdehnung nach thermischer Alterung | MFR 190°C/ 10 kg [g/ 10min] |
|---|---|---|---|---|
| Vergleichsbeispiel 2 | 55A | >500% | geschmolzen | 26,6 |
| Beispiel 11 | 55A | >400% | >300% | 89,0 |
| Beispiel 12 | 55A | >500% | >300% | 330 |

Die mechanische Performanz eines TPUs mit einer geringen Shore-A-Härte (55A), welches kein Si-Polyol aufwies (Vergleichsbeispiel 2) wurde durch die thermische Alterung selbst im Kurzzeittest signifikant beeinträchtigt - der Prüfkörper schmolz bereits innerhalb weniger Minuten. Im Gegensatz dazu zeigten die Si-basierten TPUs, hier mit Si-Polyol 2 insbesondere in Verbindung mit Kettenverlängerer 4, obwohl sie eine Shore-A-Härte von nur 55A aufwiesen, in der thermischen Alterung nur eine geringe Verschlechterung der Reißdehnung - diese bliebt selbst nach 6 Stunden noch bei über 300%; zusätzlich blieben die Prüfkörper gemäß den Beispielen 11 und 12 beide formstabil. Da Standard-TPU-Materialien im Normalfall bei Temperaturen oberhalb von 180 °C geschmolzen sind, ist dies eine sehr gute Alterungsperformanz, die durch den Einbau des Si-Polyols, insbesondere in Verbindung mit dem Diamin Kettenverlängerer 4, bedingt ist.

**15. Beispiel 13 und Vergleichsbeispiel 3 - Herstellung von eTPU**

15.1 Herstellung des TPUs

Das TPU von Beispiel 13 und Vergleichsbeispiel 3 wurden wie folgt auf einem Reaktionsextruder hergestellt. In das erste Gehäuse eines Zweiwellenextruders Typ ZSK 58 der Firma Coperion - Werner & Pfleiderer, mit einer Verfahrenslänge von 48 D wurde eine Mischung aus dem Kettenverlängerer 3, Polyol 1, sowie ggf. dem Si-Polyol 3 und eines Katalysators mit einer Vorlagetemperatur von 160°C einerseits sowie getrennt hiervon das 4,4-Diphenylmethandiisocyanat mit einer Vorlagetemperatur von 65°C, sowie dem phenolisches Antioxidanz 3 dosiert. Die Drehzahl der Doppelschnecke betrug 200 $min^{-1}$. Die Temperatureinstellwerte der Gehäuse lagen in Stromabrichtung im ersten Schneckendrittel zwischen 200 und 230°C, im zweiten Schneckendrittel zwischen 210 und 190°C und im dritten und letzten Schneckendrittel bei 190-200°C. Der Ausstoß betrug 200 kg/h. Nach dem Schmelzeabschlag durch Unterwassergranulierung und integrierter zentrifugaler Trocknung wurde das Granulat bei ca. 80 bis 90°C endgetrocknet. Tabelle 9 zeigt die Zusammensetzung der TPUs, wobei die Massen aller Bestandteile in Gramm angegeben sind.

Tabelle 9: Zusammensetzung der TPUs von Beispiel 13 und Vergleichsbeispiel 3

| Zusammensetzung | Beispiel 13 | Vergleichsbeispiel 3 |
|---|---|---|
| Polyol 1 [g] | 900,00 | 1000 |
| Si-Polyol 3 [g] | 100,00 | - |
| Isocyanat 1 [g] | 633,28 | 610,6 |
| Kettenverlängerer 1 [g] | 140,49 | 133,0 |
| Antioxidant 3 [g] | 17,880 | 18,0 |
| Kennzahl | 1000 | 985 |
| MFR (190 °C/21,6 kg) nach 2h/110 °C [g/10min] | 70 | 63 |
| Shore-Härte | 85A | n.b. |
| n.b.: nicht bestimmt | | |

Tabelle 10: Zusammensetzung der TPUs von Beispiel 14 und 15

| Zusammensetzung | Beispiel 14 | Beispiel 15 |
|---|---|---|
| Polyol 1 [g] | 900,00 | 900,00 |
| Si-Polyol 3 [g] | 100,00 | 100,00 |
| Isocyanat 1 [g] | 432,45 | 685,64 |
| Kettenverlängerer 1 [g] | 69,35 | 160,52 |
| Antioxidant 3 [g] | 15,16 | 18,62 |
| Kennzahl | 1000 | 1000 |
| Shore-Härte | 70A | 90A |

15.2 Herstellung des eTPUs

In einem Doppelschneckenextruder mit einem Schneckendurchmesser von 44 mm und einem Verhältnis von Länge zu Durchmesser von 42 wurden 99 Gewichtsanteile eines getrockneten thermoplastischen Polyurethans (TPU) und 1 Gewichtsanteil eines TPUs, welches in einem separaten Extrusionsprozess mit 4,4'-Diphenylmethandiisocyanat mit einer mittleren Funktionalität von 2,05 versetzt wurde, gemischt und aufgeschmolzen. Nach dem Aufschmelzen wurde eine Mischung aus $CO_2$ (2 Gewichtsanteile) und $N_2$(0,2 Gewichtsanteile) als Treibmittel zugegeben. Beim Durchlaufen der restlichen Extruderstrecke wurden das Treibmittel und die Polymerschmelze miteinander vermischt, so dass sich eine homogene Mischung bildete. Der Gesamtdurchsatz des Extruders, welcher ein TPU, welches in einem separaten Extrusionsprozess mit 4,4'-Diphenylmethandiisocyanat mit einer mittleren Funktionalität von 2,05 versetzt wurde und die Treibmittel beinhaltete, betrug 40 kg/h. Das Schmelzgemisch wurde anschließend mittels einer Zahnradpumpe (ZRP) über ein Anfahrventil mit Siebwechsler (AV) in eine Lochplatte (LP) gedrückt und in der Schneidkammer der Unterwassergranulierung (UWG) zu Granulaten geschnitten und mit dem temperierten und unter Druck stehenden Wasser abtransportiert und dabei expandiert. Nach der Abscheidung der expandierten Granulate aus dem Wasser mittels eines Zentrifugaltrockners wurden die expandierten Granulate bei 60 °C für 3 h getrocknet. Die verwendeten Temperaturen der Anlagenteile sind für das Vergleichsbeispiel 3 und das Beispiel 13 in Tabelle 11 aufgelistet.

Tabelle 11: Temperaturdaten der Anlagenteile für das Vergleichsbeispiel 3 und das Beispiel 13

| | Temperaturbereich im Extruder (°C) | Temperatur-bereich der ZRP (°C) | Temperaturbereich des AV (°C) | Temperaturbereich der LP (°C) |
|---|---|---|---|---|
| Vergleichsbeispiel 3 | 160 - 220 | 160 - 200 | 160 - 200 | 220 |
| Beispiel 13 | 180 - 220 | 180 | 180 | 220 |

Die für das Beispiel 13 und Vergleichsbeispiel 3 verwendeten Wassertemperatur und der Wasserdruck sowie die resultierenden Schüttdichten der expandierten Granulate sind in Tabelle 12 aufgelistet.

Tabelle 12: Wassertemperatur und Wasserdruck sowie die resultierenden Schüttdichten der expandierten Granulate gemäß Beispiel 13 und Vergleichsbeispiel 3

| | Partikelmasse (mg) | Schüttdichte (g/l) | Wasserdruck in der UWG (bar) | Wassertemperatur in der UWG (°C) |
|---|---|---|---|---|
| Vergleichsbeispiel 3 | 26 | 180 | 15 | 45 |
| Beispiel 13 | 26 | 190 | 15 | 50 |

15.2.1 Herstellung des eTPUs auf Basis von TPU mit unterschiedlichen Shore Härten

In einem Doppelschneckenextruder mit einem Schneckendurchmesser von 18 mm und einem Verhältnis von Länge zu Durchmesser von 40 wurden 99 Gewichtsanteile eines getrockneten thermoplastischen Polyurethans (TPU) und 1 Gewichtsanteil eines TPUs, welches in einem separaten Extrusionsprozess mit 4,4'-Diphenylmethandiisocyanat mit einer mittleren Funktionalität von 2,05 versetzt wurde, gemischt und aufgeschmolzen. Nach dem Aufschmelzen wurde eine Mischung aus $CO_2$ und $N_2$ als Treibmittel zugegeben. Beim Durchlaufen der restlichen Extruderstrecke wurden das Treibmittel und die Polymerschmelze miteinander vermischt, so dass sich eine homogene Mischung bildete. Der Gesamtdurchsatz des Extruders, welcher ein TPU, welches in einem separaten Extrusionsprozess mit 4,4'-Diphenylmethandiisocyanat mit einer mittleren Funktionalität von 2,05 versetzt wurde und die Treibmittel beinhaltete, betrug 1,75 kg/h. Das Schmelzgemisch wurde anschließend mittels einer Zahnradpumpe (ZRP) über ein Anfahrventil mit Siebwechsler (AV) in eine Lochplatte (LP) gedrückt und in der Schneidkammer der Unterwassergranulierung (UWG) zu Granulaten geschnitten und mit dem temperierten und unter Druck stehenden Wasser abtransportiert und dabei expandiert. Nach der Abscheidung der expandierten Granulate aus dem Wasser mittels eines Zentrifugaltrockners wurden die expandierten Granulate bei 60 °C für 3 h getrocknet. Die verwendeten Treibmittelmengen sowie die eingestellten Temperaturen der Anlagenteile sind in Tabelle 13 aufgelistet.

Tabelle 13: Temperaturdaten der Anlagenteile für das Vergleichsbeispiele 3 und das Beispiel 13

| | $CO_2$ Gewichtsanteile | $N_2$ Gewichtsanteile | Temperaturbereich im Extruder (°C) | Temperaturbereich der ZRP (°C) | Temperaturbereich des AV (°C) | Temperaturbereich der LP (°C) |
|---|---|---|---|---|---|---|
| Beispiel 14 | 1,6 | 0,3 | 170 - 215 | 185 | 200 | 200 |
| 90 A Beispiel 15 | 1,75 | 0,3 | 200 - 220 | 200 | 210 | 230 |

Die für das Beispiel 14 und Beispiel 15 verwendeten Wassertemperatur und der Wasserdruck sowie die resultierenden Schüttdichten der expandierten Granulate sind in Tabelle 14 aufgelistet.

Tabelle 14: Wassertemperatur und Wasserdruck sowie die resultierenden Schüttdichten der expandierten Granulate aus Beispiel 14 und 15

| | Partikelmasse (mg) | Schüttdichte (g/l) | Wasserdruck in der UWG (bar) | Wassertemperatur in der UWG (°C) |
|---|---|---|---|---|
| Beispiel 14 | 3,3 | 136 | 15 | 40 |
| 90 A Beispiel 15 | 3,3 | 142 | 15 | 40 |

**16. Schmutzabweisung und einfachere Reinigung der eTPUs**

Proben der expandierten Granulate gemäß Beispiel 13 und Vergleichsbeispiel 3 wurden mit Schmutz für zwei Wochen in einer Suspension aus 5 g Blumenerde und 50 ml Leitungswasser unter ständiger Bewegung in einem Schraubdeckelglas bei Raumtemperatur gelagert. Nach der Beschmutzung wurden die Proben 1 Minute unter laufendem kalten Wasser abgespült, ohne dabei zusätzliche chemische oder mechanische Reinigungsmittel zu verwenden. Der Dreckrückstand wurde optisch beurteilt und ist in Tabelle 15 gelistet.

Tabelle 15: Dreckrückstand nach Reinigung der Proben nach der Drecklagerung (optische Beurteilung).

| | Beispiel 13 (mit Si-Polyol) | Vergleich bespiel 3 (ohne Si polyol) |
|---|---|---|
| Reinigbarkeit | 0 | ++ |
| ++ sehr dreckig / + dreckig / 0 kein Rückstand und keine Verfärbungen der Oberfläche | | |

Das Vergleichsbeispiel 3 zeigt nach der Reinging eine deutliche Verschmutzung der Oberfläche. Das Si-Polyol-haltige expandierte Granulat gemäß Beispiel 13 war überraschenderweise sehr einfach zu reinigen und zeigten auch nach der Lagerung keine Verfärbungen der Oberfläche, d.h. die Schmutzabweisung der silikon-modifizierten eTPUs war signifikant besser. Das erspart einen zusätzlichen Coating-Schritt in der Herstellung der Endprodukte.

**17. Beispiele 16 bis 18 - Herstellung Si-basierter TPUs mit aromatischem Isocyanat und verschiedenen Hartsegmentanteilen bzw. verschiedenen Gehalten an Si-Polyol**

Weitere Si-basierte TPUs mit aromatischem Isocyanat wurden analog der Vorschrift von Beispiel 1 hergestellt, wobei die einzelnen Komponenten in den in Tabelle 16 angegebenen Mengen (Rezepturen) eingesetzt wurden; Si Polyol 3 und Polyol 1 wurden dabei immer gleichbleibend im Gewichtsverhältnis Si Polyol 3 : Polyol 1 von 4 : 1 eingesetzt.

Tabelle 16: Rezepturen für Beispiele 16 bis 18

| | Beispiel 16 [g] | Beispiel 17 [g] | Beispiel 18 [g] |
|---|---|---|---|
| Polyol 1 | 200 | 160 | 130 |
| Si Polyol 3 | 800 | 640 | 520 |
| Kettenverlängerer 1 | 102,55 | 164,08 | 199,98 |
| Isocyanat 1 | 446,77 | 585,24 | 660,61 |
| Antioxidant 1 | 7,82 | 7,82 | 7,63 |
| Antioxidant 2 | 7,82 | 7,82 | 7,63 |

Für die Prüfkörper gemäß Beispielen 16 bis 18 wurden der Weiterreißfestigkeit die Reißdehnung und die Shore-Härten A und D gemessen, sowie der Hartsegmentgehalt bestimmt. Die nachfolgende Tabelle 17 gibt die Ergebnisse der Prüfungen wieder.

Tabelle 17: Ergebnisse der mechanischen Untersuchungen für die Si-basierten TPUs mit verschiedenen Hartsegmentanteilen gemäß Beispiel 16 bis 18

| | **Hart-segmentgehalt [Gewichts-%]** | **Shore A** | **Shore D** | **Zugfestigkeit [MPa]** | Reißdehnung [%] | Weiterreißfestigkeit [kN/m] |
|---|---|---|---|---|---|---|
| Beispiel 16 | 25 | 74 | 15 | / | / | 6 |
| Beispiel 17 | 40 | 94 | 36 | 7 | 20 | 13 |
| Beispiel 18 | 50 | 98 | 57 | 19 | 240 | 87 |

Es wurde überraschenderweise gefunden, dass bei einem Si-basiertem TPU mit einem hohen Polysiloxandiol-Anteil, in Beispiel 16-18 von 80 Gew.-%, bezogen auf den Polyolanteil, sich die mechanischen Eigenschaften, insbesondere die Zugfestigkeit, Reißdehnung und die Weiterreißfestigkeit, signifikant verschlechtern. Die o.a. Beispiele zeigen, dass sich dies für einem breiten Bereich des HS-Anteils beobachten lässt.

**Patentansprüche**

**1.** Schaumstoffpartikel auf Basis von Polyurethan, erhalten oder erhältlich aus einem Polyurethan, insbesondere einem thermoplastischen Polyurethan, wobei das Polyurethan erhältlich oder erhalten ist durch Umsetzung von mindestens den Komponenten (i) bis (ii):

(i) eine Polyisocyanatzusammensetzung;
(ii) eine Polyolzusammensetzung, umfassend

(ii.1) mindestens ein Polyester- oder Polyetherdiol, mit einem zahlenmittleren Molekulargewicht im Bereich von 500 bis 3000 g/mol,
(ii.2) mindestens ein Polysiloxan aufweisen zwei endständige gegenüber Isocyanaten reaktive Funktionalitäten ausgewählt aus der Gruppe bestehend aus Thiogruppe, Hydroxylgruppe und Aminogruppe,

wobei das Polyurethan bevorzugt erhältlich oder erhalten ist durch Umsetzung von mindestens den Komponenten (i) bis (iii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan aufweisen zwei endständige gegenüber Isocyanaten reaktive Funktionalitäten ausgewählt aus der Gruppe bestehend aus Thiogruppe, Hydroxylgruppe und Aminogruppe;

(iii) eine Kettenverlängererzusammensetzung,

wobei das Polyurethan weiter bevorzugt erhältlich oder erhalten ist durch Umsetzung von mindestens den Komponenten (i) bis (ii):

(i) eine Polyisocyanatzusammensetzung;
(ii) eine Polyolzusammensetzung, umfassend

(ii.1) mindestens ein Polyester- oder Polyetherdiol mit einem zahlenmittleren Molekulargewicht im Bereich von 500 bis 3000 g/mol,
(ii.2) mindestens ein Polysiloxan der allgemeinen Formel I

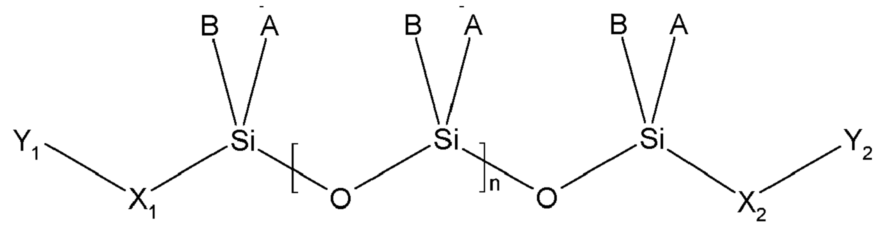

(I),

wobei n eine ganze Zahl im Bereich von 1 bis 250 ist, A und B unabhängig voneinander ausgewählt sind aus der Gruppe der C1-C20-Alkylgruppen; $X_1$, ausgewählt ist aus der Gruppe bestehend aus $(CH_2\text{-}CH_2\text{-}O)_m$-Gruppe, $(CH_2\text{-}CH_2\text{-}CH_2\text{-}O)_m$-Gruppe, $(CH_2\text{-}CHCH_3\text{-}O)_m$-Gruppe, $(CH_2)_m$-O-Gruppe und $(CH_2)_m$-Gruppe, $X_2$ ausgewählt ist aus der Gruppe bestehend aus $(O\text{-}CH_2\text{-}CH_2)_m$-Gruppe, $(O\text{-}CHCH_3\text{-}CH_2)_m$-Gruppe, $(O\text{-}CH_2\text{-}CH_2\text{-}CH_2)_m$-Gruppe, $O\text{-}(CH_2)_m$-Gruppe und $-(CH_2)_m$-Gruppe, wobei m für $X_1$, $X_2$ jeweils unabhängig eine ganze Zahl im Bereich von 1 bis 100 ist; und $Y_1$, $Y_2$ unabhängig voneinander ausgewählt sind aus der Gruppe bestehend aus Thiogruppe, Hydroxylgruppe und Aminogruppe;

(iii) eine Kettenverlängererzusammensetzung.

**2.** Schaumstoffpartikel auf Basis von Polyurethan gemäß Anspruch 1, wobei der Index n des mindestens einen Polysiloxans gemäß (ii.2) eine ganze Zahl im Bereich von 3 bis 50 oder im Bereich von 100 bis 240, ist;
und/oder
wobei A und B des Polysiloxans gemäß (ii.2) unabhängig voneinander ausgewählt sind aus der Gruppe der C1- bis C5-Alkylgruppen, bevorzugt A und B jeweils gleich sind und ausgewählt sind aus der Gruppe der C1- bis C5-Alkylgruppen, wobei weiter bevorzugt A und B beide eine Methylgruppe sind;
und/oder
wobei der Index m für $X_1$, $X_2$ des Polysiloxans gemäß (ii.2) jeweils unabhängig eine ganze Zahl im Bereich von 1 bis 50, bevorzugt im Bereich von 1 bis 20, weiter bevorzugt im Bereich von 1 bis 15, ist;
und/oder
wobei $Y_1$ und $Y_2$ des Polysiloxans gemäß (ii.2) beide eine Hydroxylgruppe oder beide eine Aminogruppe sind;
und/oder
wobei $X_1$ des Polysiloxans gemäß (ii.2) eine $(CH_2\text{-}CH_2\text{-}O)_m$-Gruppe oder eine $(CH_2\text{-}CH_2\text{-}CH_2\text{-}O)_m$-Gruppe oder eine $(CH_2\text{-}CHCH_3\text{-}O)_m$-Gruppe ist, $X_2$ des Polysiloxans gemäß (ii.2) eine $(O\text{-}CHCH_3\text{-}CH_2)_m$-Gruppe oder eine $(O\text{-}CH_2\text{-}CH_2)_m$-Gruppe oder eine $(O\text{-}CH_2\text{-}CH_2\text{-}CH_2)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind.

**3.** Schaumstoffpartikel auf Basis von Polyurethan gemäß Anspruch 1 oder 2, wobei das mindestens eine Polysiloxan gemäß (ii.2) in einem Anteil im Bereich von 0,1 bis 50 Gewichts-%, bevorzugt im Bereich von 1 bis 30 Gewichts-%, weiter bevorzugt im Bereich von 5 bis 20 Gewichts-%, bezogen auf das Gesamtgewicht aller Komponenten (ii.1) und (ii.2) enthalten ist.

**4.** Schaumstoffpartikel auf Basis von Polyurethan gemäß einem der Ansprüche 1 bis 3, wobei das Polyurethan erhältlich oder erhalten durch Umsetzung von mindestens den Komponenten (i) bis (iii):

(i) eine Diisocyanatzusammensetzung, welche mindestens 4,4'-MDI oder HDI umfasst;
(ii) eine Polyolzusammensetzung, umfassend

(ii.1) mindestens ein Polyetherdiol, bevorzugt PTHF, oder ein Polyesterdiol, wobei das Polyether- oder Polyesterdiol ein zahlenmittleres Molekulargewicht im Bereich von 500 bis 3000 g/mol aufweist,
(ii.2) mindestens ein Polysiloxan der allgemeinen Formel Ia

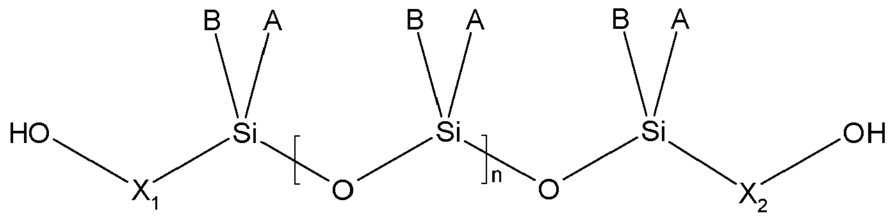

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ jeweils unabhängig eine ganze Zahl im Bereich von 3 bis 15 ist;

(iii) eine Kettenverlängererzusammensetzung, welche mindestens ein Diol oder Diamin ausgewählt aus der Gruppe bestehend aus 1,4-Butandiol, 1,6-Hexandiol, 1,2-Ethandiol und 2,4-Diamino-3,5-di(methylthio)toluol, umfasst.

**5.** Verfahren zur Herstellung von Schaumstoffpartikeln gemäß einem der Ansprüche 1 bis 4, dadurch gegenzeichnet, dass ein Polyurethan, insbesondere ein thermoplastisches Polyurethan, gemäß einem der Ansprüche 9 bis 12 aufgeschmolzen, mit einem Treibmittel versetzt und die treibmittelhaltige Schmelze unter Aufschäumen granuliert wird bei einem Druck im Bereich von 1 bis 15 bar, bevorzugt bei einem Druck im Bereich von 5 bis 15 bar;
oder
dadurch gegenzeichnet, dass ein Polyurethan, insbesondere ein thermoplastisches Polyurethan, gemäß einem der Ansprüche 1 bis 4 bei einem Druck in einem Bereich von 1 bis 15 bar, bevorzugt im Bereich von 1 bis 5 bar, in Gegenwart eines Treibmittels expandiert wird.

**6.** Partikelschaumstoffe, erhältlich durch Verschweißen von Schaumstoffpartikeln nach einem der Ansprüche 1 bis 4 oder von Schaumstoffpartikeln erhalten oder erhältlich nach dem Verfahren nach Anspruch 5 durch Wasserdampf oder Einstrahlung elektromagnetischer Strahlung;
oder
erhältlich durch Verkleben von Schaumstoffpartikeln nach einem der Ansprüche 1 bis 4 oder von Schaumstoffpartikeln erhalten oder erhältlich nach dem Verfahren nach Anspruch 5 mit Klebstoffen.

**7.** Verwendung eines Schaumstoffpartikels nach einem der Ansprüche 1 bis 4 oder eines Schaumstoffpartikels erhalten oder erhältlich nach dem Verfahren nach Anspruch 5 oder eines Partikelschaumstoffs gemäß Anspruch 6 für Anwendungen aus den Bereichen Sport, Bekleidung, Bau, Automobil, Elektronik, bevorzugt für einen Artikel ausgewählt aus der Gruppe bestehend aus Konsumentenartikel, bevorzugt ausgewählt aus der Gruppe bestehend aus Bekleidungsartikel, insbesondere Schuh und Schuhbestandteil, insbesondere Mittelsohle und Außensohle; Schmuck und Schmuckbestandteil, insbesondere für ein Smartdevice oder für Überwachungselektronik, bevorzugt ausgewählt aus der Gruppe bestehend aus Armband, Armbandbestandteil, Umhängeband und Umhängebandbestandteil, Körpergurt und Körpergurtbestandteil, Brille und Brillenbestandteil; Sportzubehörartikel, insbesondere Sportband, Dehnungsband; Dämpfungsmaterial;; Reinigungsartikeln für mobile Fahr- oder Fluggeräte, insbesondere Scheibenwischer; medizinischer Artikel, Möbelteil; Kissen, Kisssenbestandteil; Matratze, Matratzenbestandteil; Automobilzubehörteil, insbesondere Automobilkabelummantelung oder -schlauch; Folie, insbesondere Fußbodenfolie, Skifolie, Schutzfolie; Schutzhülle; Designelement für elektrische Bauteile.

Europäisches Patentamt
European Patent Office
Office européen des brevets

# EUROPÄISCHER RECHERCHENBERICHT

Nummer der Anmeldung
EP 21 17 6180

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2007/082838 A1 (BASF AG [DE]; PRISSOK FRANK [DE]; BRAUN FRANK [DE]) 26. Juli 2007 (2007-07-26)<br>* Seiten 14-15; Beispiele 1,2 * | 1-7 | INV.<br>C08G18/66<br>C08G18/61<br>C08G18/40<br>C08G18/73<br>C08G18/76<br>C08G18/24<br>C08G18/42<br>C08G18/48<br>C08G18/08<br>C08G18/32<br>C08J9/12<br>C08J9/16<br>B29C44/34<br>C08J9/232<br>C08J9/236<br>B29K75/00 |
| A | US 2015/237823 A1 (SCHMITT WILFRIED [DE] ET AL) 27. August 2015 (2015-08-27)<br>* Absatz [0063]; Beispiele 1-3; Tabelle 1 * | 1-7 | |
| A | DE 28 17 457 A1 (BAYER AG) 31. Oktober 1979 (1979-10-31)<br>* Beispiele 1,2; Tabelle 1 *<br>* Seite 4, Zeile 28 - Seite 10, Zeile 8 * | 1-7 | |
| A | EP 0 891 999 A1 (TAKATA CORP [JP]; SHINETSU CHEMICAL CO [JP]; DAINICHISEIKA COLOR CHEM) 20. Januar 1999 (1999-01-20)<br>* Seite 2, Zeile 31 - Seite 5, Zeile 58 *<br>* Beispiele 1,3; Tabelle 1 * | 1-7 | RECHERCHIERTE SACHGEBIETE (IPC) |
| A | DE 10 2015 225456 A1 (DONGSUNG CORP [KR]; HYUNDAI MOBIS CO LTD [KR]; HYUNDAI MOTOR CO LTD [K) 2. Februar 2017 (2017-02-02)<br>* Absätze [0001], [0009], [0012], [0015], [0021], [0022] - [0049], [0055] - [0057] *<br>* Beispiel 1 * | 1-7 | C08G<br>C08J<br>B29C |
| A | JP S63 179916 A (DAINIPPON INK & CHEMICALS) 23. Juli 1988 (1988-07-23)<br>* Zusammenfassung * | 1-7 | |

Der vorliegende Recherchenbericht wurde für alle Patentansprüche erstellt

1

| Recherchenort | Abschlußdatum der Recherche | Prüfer |
|---|---|---|
| München | 21. September 2021 | Neugebauer, Ute |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................................
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 21 17 6180

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| | | | ADD.<br>C08G101/00 |
| | | | RECHERCHIERTE SACHGEBIETE (IPC) |
| | | | |

1

Der vorliegende Recherchenbericht wurde für alle Patentansprüche erstellt

| Recherchenort | Abschlußdatum der Recherche | Prüfer |
|---|---|---|
| München | 21. September 2021 | Neugebauer, Ute |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 17 6180

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-2021

| Im Recherchenbericht angeführtes Patentdokument | Datum der Veröffentlichung | Mitglied(er) der Patentfamilie | Datum der Veröffentlichung |
|---|---|---|---|
| WO 2007082838 A1 | 26-07-2007 | AT 482991 T | 15-10-2010 |
| | | CN 101370861 A | 18-02-2009 |
| | | CN 105601980 A | 25-05-2016 |
| | | EP 1979401 A1 | 15-10-2008 |
| | | US 2010222442 A1 | 02-09-2010 |
| | | US 2012329892 A1 | 27-12-2012 |
| | | US 2018100049 A1 | 12-04-2018 |
| | | US 2021002445 A1 | 07-01-2021 |
| | | US 2021002446 A1 | 07-01-2021 |
| | | US 2021002447 A1 | 07-01-2021 |
| | | US 2021002448 A1 | 07-01-2021 |
| | | US 2021002449 A1 | 07-01-2021 |
| | | US 2021022436 A1 | 28-01-2021 |
| | | WO 2007082838 A1 | 26-07-2007 |
| US 2015237823 A1 | 27-08-2015 | CN 104684382 A | 03-06-2015 |
| | | EP 2716153 A1 | 09-04-2014 |
| | | EP 2903421 A1 | 12-08-2015 |
| | | ES 2570532 T3 | 18-05-2016 |
| | | US 2015237823 A1 | 27-08-2015 |
| | | WO 2014053343 A1 | 10-04-2014 |
| DE 2817457 A1 | 31-10-1979 | AT 378535 B | 26-08-1985 |
| | | DE 2817457 A1 | 31-10-1979 |
| | | EP 0004939 A2 | 31-10-1979 |
| | | IE 50416 B1 | 16-04-1986 |
| | | US 4371684 A | 01-02-1983 |
| | | ZA 791879 B | 28-05-1980 |
| EP 0891999 A1 | 20-01-1999 | DE 69822374 T2 | 24-02-2005 |
| | | EP 0891999 A1 | 20-01-1999 |
| | | JP 3704897 B2 | 12-10-2005 |
| | | JP H1134179 A | 09-02-1999 |
| | | US 5945185 A | 31-08-1999 |
| DE 102015225456 A1 | 02-02-2017 | CN 106397720 A | 15-02-2017 |
| | | DE 102015225456 A1 | 02-02-2017 |
| | | KR 20170013099 A | 06-02-2017 |
| | | US 2017029554 A1 | 02-02-2017 |
| JP S63179916 A | 23-07-1988 | JP 2819410 B2 | 30-10-1998 |
| | | JP S63179916 A | 23-07-1988 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0922552 A1
- WO 2006082183 A1
- WO 9420568 A1
- WO 2007082838 A1
- WO 2017030835 A1
- WO 2013153190 A1
- WO 2010010010 A1
- WO 2005023920 A1
- WO 2014198779 A1
- WO 2014150122 A1
- WO 2014150124 A1
- EP 1979401 B1
- US 20150337102 A
- EP 2872309 B1
- EP 3053732 A1
- WO 2016146537 A1
- WO 2010076224 A1
- US 9097835 B2
- EP 3053732 A
- EP 17198591

### In der Beschreibung aufgeführte Nicht-Patentliteratur

- Kunststoffhandbuch, Band 7, Polyurethane. Carl Hanser Verlag, 1993, vol. 7
- Kunststoffhandbuch. Carl Hanser Verlag, 1966, vol. 7, 103-113
- *CHEMICAL ABSTRACTS,* 36443-68-2
- *CHEMICAL ABSTRACTS,* 2082-79-3
- *CHEMICAL ABSTRACTS,* 125643-61-0
- *CHEMICAL ABSTRACTS,* 23128-74-7
- *CHEMICAL ABSTRACTS,* 6683-19-8
- *CHEMICAL ABSTRACTS,* 128-37-0
- Kunststoff-Taschenbuch. Hanser-Verlag, 1998
- Kunststoffhandbuch, Band 7, Polyurethane. Carl Hanser Verlag, 1993, vol. 7, 103-113